# EUROPÄISCHE PATENTSCHRIFT

(11) **EP 1 715 001 B1**
(45) Veröffentlichungstag und Bekanntmachung des Hinweises auf die Patenterteilung: **07.05.2008**
(21) Anmeldenummer: 06113446.6
(22) Anmeldetag: 19.02.2004
(51) Int. Cl.: C08L 33/14, C09D 133/14, C23C 22/03

(54) **Polymere enthaltend Phosphor- und/oder Phosphonsäure Gruppen zur Metalloberflächenbehandlung**
Polymers containg phosphonic acid / phosphoric acid groups for the treatment of metallic surfaces
Polymères comprenant des groupes acide phosphorique / phosphonique pour le traitement de surfaces métalliques

(30) Priorität: 24.02.2003 DE 10307973; 18.11.2003 DE 10353845
(43) Veröffentlichungstag der Anmeldung: 25.10.2006
(62) Teilanmeldung aus: 04712509.1
(73) Patentinhaber: BASF SE, 67056 Ludwigshafen (DE)
(72) Erfinder: Dietsche, Frank, 69198, Schriesheim (DE); Witteler, Helmut, 67157, Wachenheim (DE); Klüglein, Matthias, 67071, Ludwigshafen (DE); Klippel, Frank, 67067, Ludwigshafen (DE)
(74) Vertreter: Isenbruck, Günter

(56) Entgegenhaltungen:
- DE-A1- 19 516 765
- US-A- 4 536 225

## Beschreibung

Die vorliegende Erfindung betrifft eine Zusammensetzung zur Behandlung von Oberflächen enthaltend ein Carboxylat-haltiges Polymer, eine Passivierungsschicht auf einer Metalloberfläche, die ein Carboxylat-haltiges Polymer enthält, ein Verfahren zur Ausbildung dieser Passivierungsschicht sowie die Verwendung der erfindungsgemäßen Zusammensetzung zur Passivierung einer Metalloberfläche, einen Lackaufbau auf einer Metalloberfläche, umfassend die genannte Passivierungsschicht und eine Lackierung sowie ein Verfahren zur Ausbildung dieses Lackaufbaus.

Metallische Werkstoffe, insbesondere Eisen und Stahl, werden üblicherweise verzinkt, um sie vor korrosiven Umwelteinflüssen zu schützen. Der Korrosionsschutz des Zinks beruht darauf, dass es noch unedler ist als der metallische Werkstoff und deshalb den korrosiven Angriff zunächst ausschließlich auf sich zieht, d.h., es fungiert als Opferschicht. Der metallische Werkstoff selbst bleibt unversehrt, so lange er noch durchgehend mit Zink bedeckt ist und die mechanische Funktionalität bleibt über längere Zeiträume erhalten als bei unverzinkten Teilen. Der korrosive Angriff einer solchen Zinkschicht kann seinerseits durch Aufbringen einer Passivierungsschicht verzögert werden. Dies geschieht insbesondere bei galvanisch verzinkten Teilen, und zwar sowohl bei Teilen, die anschließend lackiert werden als auch bei solchen, die ohne Lackierung zum Einsatz kommen. Auch Aluminiumoberflächen werden, insbesondere wenn sie anschließend lackiert werden sollen, häufig mit einer Passivierungsschicht versehen. Die Passivierungsschicht verzögert den korrosiven Angriff auf die Metalloberfläche und dient gleichzeitig einer Verbesserung der Haftung von gegebenenfalls aufzubringenden Lackschichten. Anstelle des Begriffs Passivierungsschicht wird der Begriff Konversionsschicht häufig synonym verwendet.

Bisher wurden Passivierungsschichten auf Zink- oder Aluminiumoberflächen üblicherweise durch Tauchen des zu schützenden Werkstücks in wässrige saure Lösungen von CrO₃ erhalten. Nach dem Eintauchen und Trocknen ist das Werkstück vor Korrosion geschützt. Beim Eintauchen löst sich ein Teil des zu schützenden Metalls und bildet gleich darauf wieder einen oxidischen Film auf der Metalloberfläche. Dieser Film ähnelt also dem auf vielen Metallen ohnehin vorhandenen Oxidfilm, ist aber dichter und besser haftend als dieser. Unter dem Aspekt der Passivierung ist diese Cr(VI)-Behandlung optimal. Die Zeit bis zur Weißrostbildung eines unlackierten verzinkten Blechs wird durch Cr(VI)-Behandlung von weniger als 1 Stunde auf mehr als 100 Stunden verlängert.

Um die Anwendung der ausgesprochen giftigen und karzinogenen Cr(VI)-Verbindungen zu vermeiden, wird in EP-A 0 907 762 eine Passivierung mit Hilfe von sauren, wässrigen Lösungen von Cr(III)-Salzen vorgeschlagen. Durch die Applikation als sogenannte "Dickschicht" mit einer Dicke von 300 bis 400 µm bieten diese Passivierungsschichten einen hervorragenden Korrosionsschutz.

Zur Vermeidung des Einsatzes von Schwermetallen wie Cr(VI) und ebenfalls Cr(III) gewinnt der Einsatz von Polymeren an Bedeutung.

DE-A 195 16 765 betrifft ein Verfahren zur Erzeugung von Konversionsschichten auf Oberflächen aus Zink oder Aluminium durch Behandlung mit einer sauren Lösung, die einen organischen Filmbildner, Aluminiumionen in Form eines wasserlöslichen Komplexes mit chelatbildenden Carbonsäuren und Phosphorsäure enthält. Als organische Filmbildner sind carboxylgruppenhaltige Polymere, insbesondere Homo- und/oder Copolymerisate von Acryl- und/oder Methacrylsäure genannt. DE-A 195 16 765 enthält jedoch keine Information, welche Copolymerisate eingesetzt werden können. Die Beispiele betreffen lediglich den Einsatz von Homopolymerisaten. Im Gegensatz dazu sind die beschriebenen Copolymere durch Einführung von zusätzlichen Carboxylatfunktionalitäten pro Monomereinheit, insbesondere bei Verwendung von Maleinsäure-Acrylsäure Copolymeren, verbesserte Korrosionseigenschaften erzielbar. Die Kombination mit zusätzlichen Comonomeren ist zur Steuerung der mechanischen und adhäsiven Eigenschaften der Polymere geeignet.

DE-A 197 54 108 betrifft ein wässriges Korrosionsschutzmittel zur Behandlung von Oberflächen aus verzinktem oder legierungsverzinktem Stahl sowie auch Aluminium. Das Korrosionsschutzmittel enthält Hexafluoroanionen von Titan(IV) und/oder Zircon(IV), Vanadiumionen, Cobaltionen, Phosphorsäure sowie bevorzugt zusätzlich einen organischen Filmbildner, insbesondere auf Polyacrylat-Basis. Genaue Zusammensetzungen von Copolymeren basierend auf Acrylsäure und/oder Methacrylsäure mit Monomeren, die nicht auf (Meth)acrylsäure basieren, werden in DE-A 197 54 108 nicht erwähnt.

Müller et al., Corrosion Science 42, 577 bis 584 (2000) betrifft amphiphile Copolymere als Korrosionsinhibitoren für Zinkpigmente. Als Copolymere werden Styrol-Maleinsäure-Acrylester-Copolymere eingesetzt. Passivierungsschichten auf Metalloberflächen und deren Herstellung werden nicht offenbart.

US 4,536,225 betrifft ein Verfahren zur Korrosionsinhibierung von Metalloberflächen durch Behandlung der Metalloberflächen mit einer Zusammensetzung, die einen Phosphatmonoester eines Hydroxyalkylacrylates oder eines Hydroxyalkylalkylacrylates gelöst in einem organischen lösungsmittel enthält. Zusätzlich kann die Zusammensetzung noch einen Phosphatdiester eines Hydroxyalkylacrylates oder eines Hydroxyalkylalkylacrylats enthalten. Des Weiteren kann die Zusammensetzung neben dem Phosphatdiester ein Hydroxyalkylacrylat oder ein Hydroxyalkylalkylacrylat enthalten, oder das organische Lösungsmittel kann ein Hydroxyalkylacrylat oder ein hydroxyalkylalkylacrylat sein.

In WO 2004/074372 A1, der Stammanmeldung zu der vorliegenden Teilanmeldung, ist ein Zusammensetzung zur Behandlung von Metalloberflächen offenbart enthaltend
a) mindestens ein copolymer als Komponente A aufgebaut aus
   aa) 50 bis 99,9 Gew.-% (Meth)acrylsäure oder deren Salze, als Komponente Aa;
   ab1) 0,1 bis 50 Gew.-% eines Carboxylat-haltigen Monomeren, als Komponente Ab1 und/oder
   ab2) 0,1 bis 50 Gew.-% Phosphor-und/oder Phosphorsäure oder deren Salze enthaltende Gruppen aufweisende Monomere als Komponente Ab2, die mit den unter aa) und ac) genannten Monomeren sowie der Komponente Ab1 polymerisierbar sind
   ac) 0 bis 30 Gew.-% weiteren Comonomeren, die mit den unter aa) und ab) genannten Monomeren polymerisierbar sind, als Komponente Ac;
b) Wasser oder ein anderes Lösungsmittel, das geeignet ist das Polymer (komponente A) zu lösen, zu dispergieren oder zu emulgieren, als Komponente B;
c) gegebenenfalls weitere oberflächenaktive Additive, Dispergiermittel, suspendiermittel und/oder Emulgiermittel als Komponente C.

Aufgabe der vorliegenden Erfindung ist die Bereitstellung von Zusammensetzungen zur Behandlung von Metalloberflächen, die zur Ausbildung einer Passivierungsschicht auf den Metalloberflächen geeignet sind. Die erhaltene Passivierungsschicht soll sowohl für Werkstücke geeignet sein, die anschließend lackiert werden, als auch für solche, die ohne Lackierung zum Einsatz kommen. Dabei ist bei anschließender Lackierung der mit der Passivierungsschicht versehenen Werkstücke zu beachten, dass eine ausreichende Haftung zur nachfolgenden Lackschicht gewährleistet ist.

Die Aufgabe wird gelöst durch Bereitstellung einer Cr(VI)-freier Zusammensetzung zur Behandlung von Metalloberflächen mit einem pH-Wert von 1 bis 6 enthaltend
a) mindestens ein Copolymer als Komponente A aufgebaut aus
   aa) 50 bis 99,9 Gew.-% (Meth)acrylsäure oder deren Salzen als Komponente Aa
      und
   ab) 0,1 bis 50 Gew.-% Phosphor- und/oder Phosphonsäure oder deren Salze enthaltende Gruppen aufweisende Monomere, die mit den unter aa) und ac) genannten Monomeren polymerisierbar sind, als Komponente Ab;
   ac) 0 bis 30 Gew.-% weiteren Comonomeren, die mit den unter aa) und ab) genannten Monomeren polymerisierbar sind, als Komponente Ac;
b) Wasser oder ein Gemisch aus Wasser und einem oder mehreren Wasserlöslichen Lösungsmitteln, wobei der Wasseranteil mindestens 75 Gew.-% beträgt, und das geeignet ist, das Polymer (Komponente A) zu lösen, zu dispergieren, zu suspendieren oder zu emulgieren, als Komponente B;
c) mindestens eine Säure oder mindestens ein Alkali-oder Erdalkalimetallsalz der entsprechenden Säure ausgewählt aus der Gruppe bestehend aus Phosphorsäure, Schwefelsäure, Sulfonsäuren, Ameisensäure, Essigsäure, Salpetersäure, Flussäure und Salzsäure als Komponente F.

Bei den in den erfindungsgemäßen Zusammensetzungen eingesetzten Copolymeren handelt es sich um vollständig hydrophile Copolymere. Passivierungsschichten, enthaltend die erfindungsgemäß eingesetzten hydrophilen Copolymere weisen einen hervorragenden Korrosionsschutz auf und sind für Nachfolgebehandlungen, zum Beispiel eine Lackierung, sehr gut geeignet.

Als Metalloberfläche ist im Allgemeinen jede beliebige Metalloberfläche einsetzbar. Bevorzugt handelt es sich bei der Metalloberfläche um Aluminium oder AluminiumLegierungen bzw. um Zink oder Zinklegierungen, wobei eine Oberfläche aus Zink oder Zink-Legierungen im Allgemeinen durch einen Verzinkungsvorgang eines metallischen Werkstoffs wie Eisen oder Stahl erhalten wird

Die Ansprüche definieren der vorliegenden Erfindung.

### Komponente A

Bei der Komponente A handelt es sich um ein Copolymer aufgebaut aus
aa) 50 bis 99,9 Gew.-%, bevorzugt 50 bis 90 Gew.-%, besonders bevorzugt 50 bis 75 Gew.-% (Meth)acrylsäure oder deren Salzen als Komponente Aa,
   und
ab) 0,1 bis 50 Gew.-%, bevorzugt 1 bis 20 Gew.-%, besonders bevorzugt 2 bis 10 Gew.-% Phosphor- und/oder Phosphonsäure oder deren Salze enthaltende Gruppen aufweisende Monomere, die mit den unter aa) und ac) genannten Monomeren polymerisierbar sind, als Komponente Ab;
ac) 0 bis 30 Gew.-%, bevorzugt 0 bis 20 Gew.-%, besonders bevorzugt 0 bis 10 Gew.-% weiteren Comonomeren, die mit den unter aa) und ab) genannten Monomeren polymerisierbar sind, als Komponente Ac.

### Komponente Aa

Bei der Komponente Aa handelt es sich um (Meth)acrylsäure oder ein Salz der (Meth)acrylsäure. Es ist auch möglich, Gemische der genannten Komponenten als Komponente Aa einzusetzen.

Geeignete Salze der (Meth)acrylsäure sind insbesondere die Alkali- bzw. Erdalkalisalze, bevorzugt Lithium-, Natrium- oder Kaliumsalze.

Bevorzugt werden als Komponente Aa Acrylsäure und/oder Methacrylsäure eingesetzt.

### Komponente Ab 2

Das Copolymer (Komponente A) ist aus Phosphor- und/oder Phosphonsäure oder deren Salze enthaltende Gruppen aufweisenden Monomeren, die mit den unter aa) und ac) genannten Monomeren polymerisierbar sind, aufgebaut.

Geeignete Monomere sind bevorzugt Monomere der allgemeinen Formeln 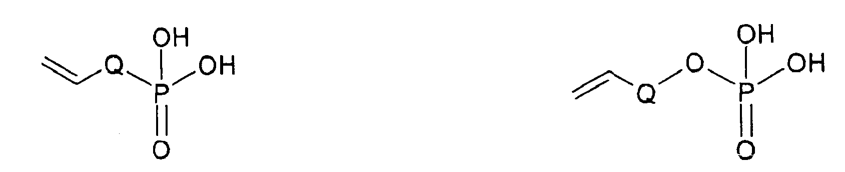 worin Q die folgenden Bedeutungen aufweisen kann:
eine Einfachbindung,
eine Alkylengruppe mit 1 bis 6 Kohlenstoffatomen in einer Kette, wobei ein oder mehrere, bevorzugt 1 oder 2, Kohlenstoffatome der Alkylengruppe mit Alkylgruppen, bevorzugt Methyl, O-haltigen Gruppen, bevorzugt -OH, Phosphorsäuregruppen und/oder =O substituiert sein können und/oder ein oder mehrere, bevorzugt 1 oder 2, nicht benachbarte Kohlenstoffatome durch -O- ersetzt sein können.

Besonders bevorzugt sind geeignete Phosphor- und/oder Phosphonsäure oder deren Salze enthaltene Gruppen aufweisende Monomere, die mit den unter aa) und ac) genannten Monomeren polymerisierbar sind, ausgewählt aus der Gruppe bestehend aus 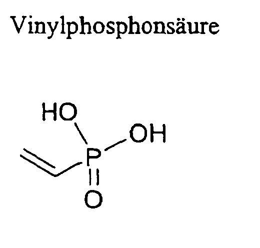 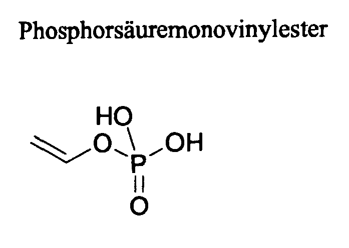 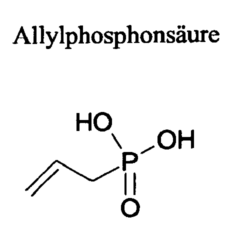 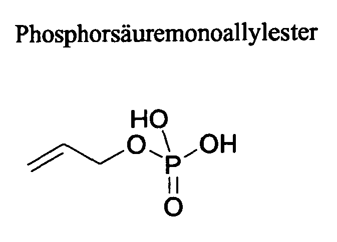 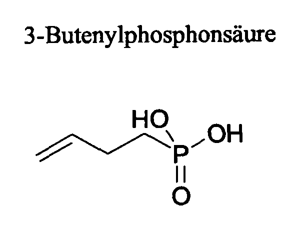 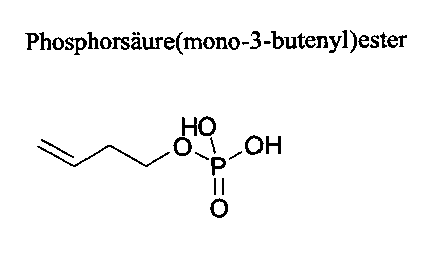 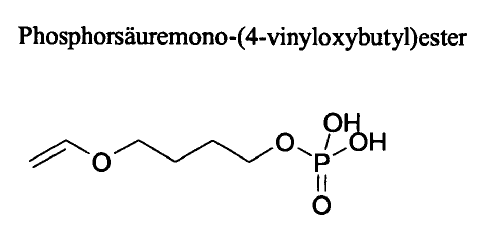 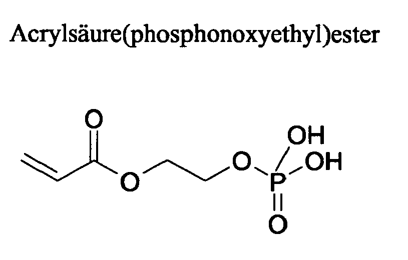 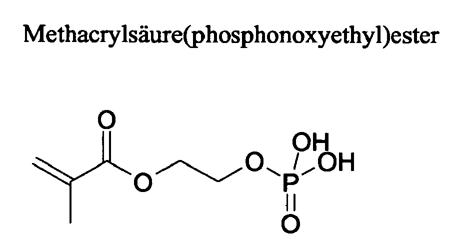 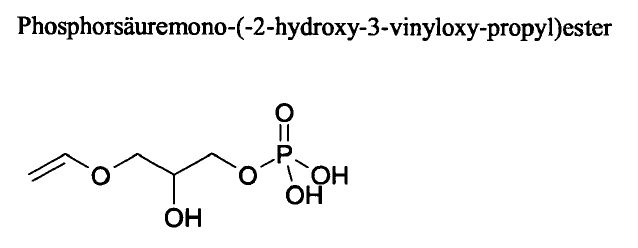 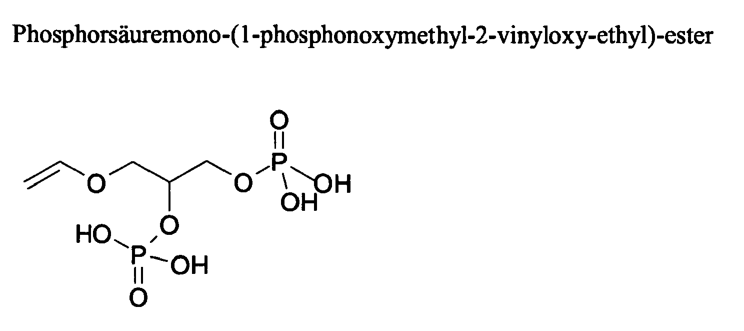 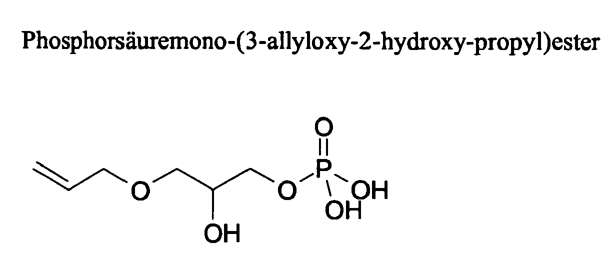 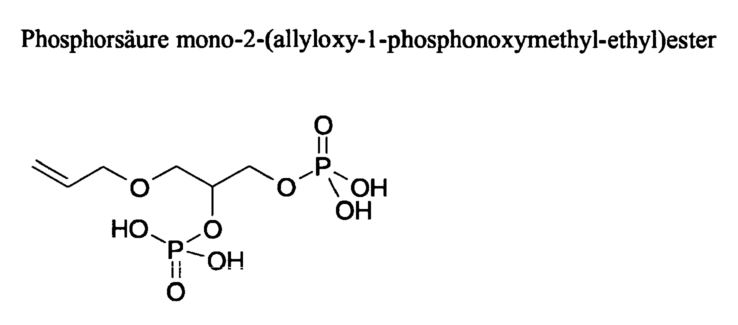 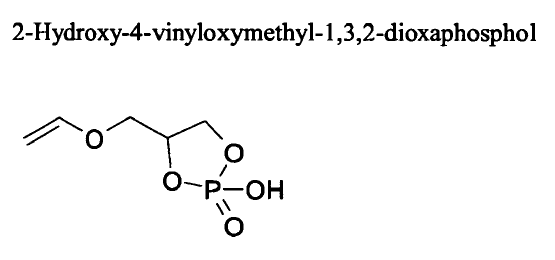 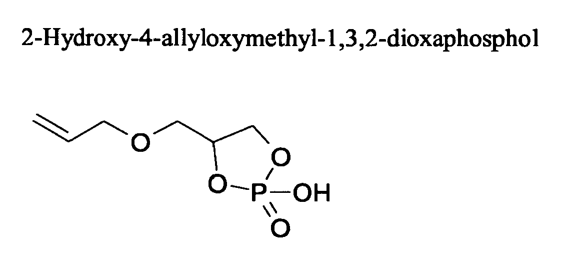 und

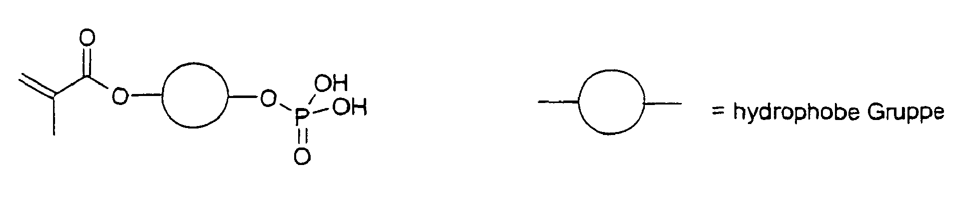

Des Weiteren können die Salze der vorstehend genannten Monomere eingesetz werden. Geeignete Salze sind insbesondere die Alkali- bzw. Erdalkalisalze, bevorzugt Lithium-, Natrium- oder Kaliumsalze.

Besonders bevorzugt sind Vinylphosphonsäure und Methacrylsäure(phosphonoxyethyl)ester.

Unter einer hydrophoben Gruppe ist eine beliebige, dem Fachmann bekannte, hydrophobe Gruppe zu verstehen. Bevorzugt ist die hydrophobe Gruppe eine Alkylengruppe -(CR^{a}R^{b})ₙ-, worin n = 1 bis 10 ist und R^{a} und R^{b} unabhängig voneinander Wasserstoff, C₁- bis C₆-Alkyl oder Aryl, das gegebenenfalls substituiert sein kann, zum Beispiel Phenyl, bedeuten. In einer weiteren bevorzugten Ausführungsfomr ist die hydrophobe Gruppe aus Alkylenoxid-Einheiten, bevorzugt Ethylenoxid-, Propylenoxid- und/oder Butylenoxid-Einheiten, besonders bevorzugt Ethylenoxid- und/oder Propylenoxid-Einheiten aufgebaut. Bevorzugt ist die hydrophobe Gruppe aus 3 bis 10 der vorstehend genannten Alkylenoxid-Einheiten aufgebaut. Des Weiteren kann es sich bei der hydrophoben Gruppe um eine Polytetrahydrofurangruppe handeln. Es ist ebenfalls möglich, dass die hydrophobe Gruppe aus mehreren verschiedenen der vorstehend genannten Gruppen, also aus Alkylengruppen und/oder Alkylenoxid-Einheiten und/oder Polytetrahydrofuran-Gruppen aufgebaut ist. Ganz besonders bevorzugt ist die hydrophobe Gruppe aus einer Alkyleneinheit der Formel -(CH₂)ₙ-, mit n = 1-10, 2 bis 10 Ethylenoxid-Einheiten oder 2-10 Propylenoxid-Einheiten aufgebaut.

Die Copolymere (Komponente A) sind somit neben Monomeren der Komponente Aa aus Monomeren der Komponente Ab aufgebaut.

Die Copolymere können (Komponente A) zusätzlich gegebenenfalls aus Comonomeren der Komponente Ac aufgebaut sein.

### Komponente Ac

Als Komponente Ac sind alle Comonomere geeignet, die mit den unter aa) und ab) genannten Monomeren polymerisierbar sind. Solche Monomere sind bevorzugt ethylenisch ungesättigte Monomere.

Als wenigstens eine ethylenisch ungesättigte Gruppe aufweisende Monomere kommen z.B. in Betracht: Olefine wie Ethylen oder Propylen, vinylaromatische Monomere wie Styrol, Divinylbenzol, 2-Vinylnaphthalin und 9-Vinylanthracen, substituierte vinylaromatische Monomere wie p-Methylstyrol, α-Methylstyrol, o-Chlorstyrol, p-Chlorstyrol, 2,4-Dimethylstyrol, 4-Vinylbiphenyl und Vinyltoluol, Ester aus Vinylalkohol und 1 bis 18 C-Atome aufweisenden Monocarbonsäuren wie Vinylacetat, Vinylpropionat, Vinyl-nbutyrat, Vinyllaurat und Vinylstearat, Anhydride oder Ester aus 3 bis 6 C-Atome aufweisenden α,β-monoethylenisch ungesättigten Mono- und Dicarbonsäuren (mit Ausnahme der als Komponente Ab genannten Verbindungen), wie insbesondere Acrylsäure und Methacrylsäure, mit im allgemeinen 1 bis 20, bevorzugt 1 bis 12, besonders bevorzugt 1 bis 8 und ganz besonders bevorzugt 1 bis 4 C-Atome aufweisenden Alkanolen wie insbesondere Acrylsäure- und Methacrylsäure-, Methyl-, Ethyl-, -n-Butyl-, iso-Butyl-, tert.-Butyl- und -2-Ethylhexylester, Maleinsäuredimethylester oder Maleinsäure-n-butylester, oder die Ester der genannten Carbonsäuren mit Alkoxyverbindungen, beispielsweise Ethylenoxid oder Polyethylenoxid, wie Ethylenoxidacrylat oder -methacrylat, die Nitrile der vorgenannten α,β-monoethylenisch ungesättigten Carbonsäuren wie Acrylnitril und Methacrylnitril sowie C₄₋₈-konjugierte Diene wie 1,3-Butadien und Isopren und N-Vinylverbindungen, wie beispielsweise N-Vinylpyrrolidon und N-Vinylformamid; Vinylether, H₂C=CH-OR⁵, worin R⁵ ein C₁ - bis C₁₈-Alkylrest ist, der verzweigt oder unverzweigt sein kann, sowie geeignete Monomere, die Sulfon- oder Sulfatgruppen enthalten.

Als Styrolverbindungen kommen solche der allgemeinen Formel II in Betracht: 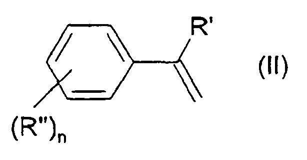 in der R' und R" unabhängig voneinander für H oder C₁- bis C₈-Alkyl und n für 0, 1, 2 oder 3 stehen.

Besonders bevorzugt werden in dem erfindungsgemäßen Verfahren die Monomere Styrol, α-Methylstyrol, Divinylbenzol, Vinyltoluol, N-Vinylpyrrolidon und N-Vinylformamid, C₁- bis C₂₀-Alkyl-acrylate und C₁- bis C₂₀-Alkyl-methacrylate, insbesondere n-Butylacrylat, 2-Ethylhexylacrylat oder Methylmethacrylat und Butadien, außerdem Acrylnitril, Glycidester und (Poly)alkoxylate der Acryl- und Methacrylsäure, sowie Monomerengemische, die zu wenigstens 85 Gew.% aus den vorgenannten Monomeren oder Gemischen der vorgenannten Monomere zusammengesetzt sind, eingesetzt.

Die als Komponente A eingesetzten Polymere können auf alle dem Fachmann bekannten Verfahrensweisen hergestellt werden. Bevorzugt werden die Copolymere durch freie radikalische Copolymerisation der genannten Komponenten Aa und Ab und gegebenenfalls Ac hergestellt. Die Mengenverhältnisse der eingesetzten Komponenten sind bereits vorstehend genannt. Die freie radikalische Copolymerisation kann beispielsweise in Lösung, Emulsion, Dispersion, Suspension oder Substanz erfolgen.

Geeignete Polymerisationsverfahren zur Herstellung der als Komponente A eingesetzten Polymere sind beispielsweise in DE-A 196 06 394 aufgeführt.

Besonders bevorzugt werden die Copolymere (A) durch freie radikalische Copolymerisation in Lösung hergestellt. Bevorzugt ist das Lösungsmittel ausgewählt aus der Gruppe bestehend aus Wasser, Alkoholen, Ethern und Ketonen, bevorzugt Wasser.

Werden Anhydrid-Copolymere erhalten, so werden diese bevorzugt durch Zugabe geeigneter Mengen entsalzten Wassers und mindestens einer stickstoffhaltigen Base hydrolysiert. Bevorzugt werden als stickstoffhaltige Basen tertiäre alkalische Amine eingesetzt, besonders bevorzugt Hydroxylamine wie Mono-, Di-, Triethanolamin, 3-Dimethylaminopropylamin und Imidazol.

Die Polymerisationsbedingungen sind dem Fachmann bekannt.

Die Carboxylat-haltigen Copolymere (Komponente A) können in einer weiteren Ausführungsform durch polymeranaloge Umsetzungen erhalten werden. Geeignete polymeranaloge Umsetzungen sind dem Fachmann bekannt. Beispielsweise ist die Herstellung der Carboxylat-haltigen Copolymere durch entsprechende Funktionalisierung von durch Copolymerisation hergestellten Copolymeren; durch Umsetzung von mehrwertigen Alkoholen mit höherwertigen Carbonsäuren und/oder Phosphorsäuregruppen-haltigen Verbindungen möglich.

Unter Copolymeren sollen im Allgemeinen solche Verbindungen verstanden werden, die mindestens 3 Wiederholungseinheiten, bevorzugt mehr als 10 Wiederholungseinheiten aufweisen. Das Gewichtsmittel des Molekulargewichts (Mw) der erfindungsgemäß eingesetzten Copolymere beträgt im Allgemeinen 500 bis 5 000 000 g/mol, bevorzugt 1000 bis 1,5 Millionen g/mol. Das Polymer kann auch gering anvernetzt sein, so dass sich kein Molekulargewicht angeben lässt, obwohl das Polymer in technisch üblichen Lösungsmitteln dispergiert, emulgiert, oder suspendiert werden kann. Das Molekulargewicht (Mw) wurde mittels Gelpermeationschromatographie mit Polystyrol-Standard ermittelt.

Bei den erfindungsgemäß als Komponente A eingesetzten Copolymeren handelt es sich um hydrophile Copolymere. Passivierungsschichten enthaltend diese hydrophilen Copolymere sind hervorragend für eine nachfolgende Lackierung geeignet.

### Komponente B

Die Komponente B ist Wasser oder ein Gemisch aus Wasser und einem weiteren, wassermischbaren Lösungsmittel, wobei der Wasseranteil mindestens 75 Gew.-% beträgt, und das geeignet ist, das Copolymer (Komponente A) zu lösen oder zu dispergieren, zu suspendieren oder zu emulgieren. Unter einem Lösungsmittel wird im Rahmen des vorliegenden Textes eine flüssige Matrix verstanden, in welcher die verschiedenen Inhaltsstoffe der erfindungsgemäßen Zusammensetzung möglichst fein verteilt vorliegen. Eine derartig feine Verteilung kann beispielsweise im Sinne einer molekulardispersen Verteilung eine echte Lösung der Inhaltsstoffe im Lösungsmittel sein. Der Begriff "Lösungsmittel" umfasst jedoch auch flüssige Matrizen, in denen die Inhaltsstoffe im Sinne einer Emulsion oder Dispersion verteilt sind, d.h. keine molekulardisperse Lösung bilden.

Geeignete wassermischbare Lösungsmittel sind beispielsweise primäre oder sekundäre Mono- oder Polyalkohole mit 1 bis 6 C-Atomen wie Methanol, Ethanol, Propanol, Isopropanol, n-Butanol, Iso-Butanol, Pentanol, Hexanol, Cyclohexanol oder Glyzerin. Ebenfalls als wassermischbare Lösemittel geeignet sind niedermolekulare Ketone wie Aceton oder Methyl-Ethyl-Keton oder Etheralkohole wie Diethylenglykol oder Triethylglykol.

Geeignete Kombinationen von Wasser und wassermischbaren Lösungsmitteln sind beispielsweise Wasser/Methanol, Wasser/Ethanol, Wasser/Propanol oder Wasser/Isopropanol. Bevorzugt ist im Rahmen der vorliegenden Erfindung ein Gemisch aus Wasser und Ethanol, wobei der Wasseranteil vorzugsweise größer als 75 Gew.-%, beispielsweise größer als 80 oder 85 Gew.-%, ist.

Besonders bevorzugt wird ausschließlich Wasser als Lösungsmittel eingesetzt.

Die als wässrige Lösung erfindungsgemäß eingesetzte Zusammensetzung weist einen pH-Wert von 1 bis 6 auf, wobei je nach Substrat und Applikationsart sowie Einwirkungsdauer der erfindungsgemäß eingesetzten Zusammensetzung auf die Oberfläche des Grundmetalls engere pH-Bereiche gewählt sein können. Beispielsweise stellt man den pH-Wert zur Behandlung blanker Metalloberflächen vorzugsweise auf den Bereich von 2 bis 6 ein, bei Behandlung von Aluminiumoberflächen vorzugsweise auf den Bereich von 2 bis 4 und bei Behandlung von Stahl, Zink oder verzinktem Stahl vorzugsweise auf den Bereich von 3 bis 5 ein. Bereits vorbehandelte Oberflächen eines Grundmetalls, die beispielsweise eine Phosphatschicht tragen, werden bevorzugt mit einer erfindungsgemäß eingesetzten Zusammensetzung mit einem pH-Wert von 3,5 bis 5 in Kontakt gebracht.

Die Menge an Wasser oder einem anderen Lösungsmittel ist abhängig davon, ob die erfindungsgemäße Zusammensetzung eine einsatzfertige Zusammensetzung oder ein Konzentrat ist, sowie vom jeweiligen Einsatzzweck. Grundsätzlich ergibt sich die Menge aus den für die einsatzfertige Zusammensetzung angegeben Konzentrationen der einzelnen Komponenten.

### Komponente C

Gegebenenfalls kann die erfindungsgemäße Zusammensetzung zusätzlich oberflächenaktive Verbindungen, Emulgiermittel und/oder Dispergiermittel enthalten. Geeignete oberflächenaktive Verbindungen sind Tenside, die kationisch, anionisch, zwitterionisch oder nichtionisch sein können. Geeignete Tenside sind beispielsweise Alkyl- und Alkenylalkoxylate vom Typ R-EOₙ/POₘ wobei R im allgemeinen lineare oder verzweigte C₆-C₃₀-Alkylreste, bevorzugt C₈-C₂₀- Alkylreste sind und EO für eine Ethylenoxid-Einheit und PO für eine Propylenoxid-Einheit steht, wobei EO und PO in beliebiger Reihenfolge angeordnet sein können und n und m unabhängig voneinander > 1 und < 100 sind, bevorzugt >3 und <50, z.B. Emulan®, Lutensol® und Plurafac® (der BASF), Alkylphenolethoxylate, EO/PO-Blockcopolymere (Pluronic®, der BASF), Alkylethersulfate und Alkyammoniumsalze, sog. Quats.

Die Menge dieser Komponenten in der erfindungsgemäßen Zusammensetzung beträgt im Allgemeinen 0,01-100 g/l, bevorzugt 0,1 bis 20 g/l.

Bevorzugt enthält die erfindungsgemäße Zusammensetzung zusätzlich zu den Komponenten A, B, F, und gegebenenfalls C
d) mindestens eine stickstoffhaltige Base als Komponente D.

Bevorzugt werden als stickstoffhaltige Basen tertiäre alkalische Amine eingesetzt, besonders bevorzugt Hydroxylamine wie Mono-, Di-, Triethanolamin, 3-Dimethylaminopropylamin und Imidazol.

Die Base kann zur Hydrolyse der Copolymere (Komponente A), insbesondere der Copolymere auf Basis von (Meth)acrylsäure und Maleinsäureanhydrid und gegebenenfalls Vinylphosphonsäure oder gegebenenfalls Methacrylsäure-(phosphonoxyethyl)ester eingesetzt werden. Die Hydrolyse der Copolymere erfolgt jedoch bevorzugt durch Zugabe von Wasser.

Es ist ebenfalls möglich, eine Hydrolyse der Copolymere mit geeigneten Mengen Wasser und einer stickstoffhaltigen Base (Komponente D) direkt im Anschluss an die Herstellung der Copolymere durchzuführen. In einem solchen Fall ist eine nachträgliche Zugabe einer stickstoffhaltigen Base zu der erfindungsgemäßen Zusammensetzung enthaltend die Komponenten A, B, F und gegebenenfalls C nicht mehr erforderlich.

In einer bevorzugten Ausführungsform wird die erfindungsgemäße Zusammensetzung zur Behandlung von Metalloberflächen eingesetzt und enthält zusätzlich zu den Komponenten A, B, F, gegebenenfalls C und gegebenenfalls D.
e) mindestens ein Salz, eine Säure oder eine Base basierend auf Übergangsmetallkationen, Übergangsmetalloxoanionen, Fluorometallaten oder Lantanoiden als Komponente E,
   und/oder
g) mindestens einen weiteren Korrosionsinhibitor als Komponente G,
   und/oder
h) Verbindungen des Ce, Ni, Co, V, Fe, Zn, Zr, Ca, Mn, Mo, W, Cr und/oder Bi als Komponente H,
   und/oder
i) weitere Hilfs- und Zusatzstoffe als Komponente I,
   und/oder
j) mindestens einen Komplexbildner als Komponente J,
   und/oder
k) weitere Additive als Komponente K.

Diese Zusammensetzungen sind hervorragend zum Passivieren, insbesondere zum Passivierung der in der vorliegenden Anmeldung genannten Metalloberflächen geeignet.

### Komponente E

Als Komponente E sind Salze, Säuren und Basen basierend auf Übergangsmetallkationen, Übergangsmetalloxoanionen, Fluorometallaten oder Lanthanoiden geeignet. Geeignete Übergangsmetallkationen sind insbesondere Fluorometallate des Ti (IV), Zr (IV), Hf (IV) und/oder des Si (IV), geeignete Lanthanoide insbesondere Ce. Des Weiteren sind Wolframate und Molybdate geeignet.

Zusammensetzungen gemäß der vorliegenden Anmeldung, enthaltend die Komponente E sind insbesondere dazu geeignet, entweder eine korrosionsschützende Schicht auf einer Metalloberfläche abzuscheiden oder die korrosionsschützende Wirkung einer bereits auf der Metalloberfläche abgeschiedenen Korrosionsschicht zu verstärken. Die erfindungsgemäß eingesetzten Polymere (Komponente A) weisen in den erfindungsgemäßen Zusammensetzungen eine hervorragende Korrosionsschutzwirkung auf. Eine Zugabe der Komponente E ist jedoch nicht erforderlich, um eine hervorragende Korrosionsschutzwirkung der erfindungsgemäßen Zusammensetzungen zu erzielen. In einer Ausführungsform sind die erfindungsgemäßen Zusammensetzungen daher frei von Verbindungen gemäß Komponente E.

Die Menge der Komponente E beträgt - falls die Komponente E in den erfindungsgemäßen Zusammensetzungen enthalten ist - bevorzugt 0,02 bis 20 g/l.

### Komponente F

Die erfindungsgemäßen Zusammensetzungen enthalten des weiteren mindestens eine Säure oder mindestens ein Alkali- oder Erdalkalimetallsalz der entsprechenden Säure ausgewählt aus der Gruppe bestehend aus Phosphorsäure, Schwefelsäure, Sulfonsäuren wie Methansulfonsäure, Vinylsulfonsäure, Allylsulfonsäure, m-Nitrobenzolsulfonsäure, Naphthalinsulfonsäure und Derivaten davon, Ameisensäure, Essigsäure, Salpetersäure, Flußsäure und Salzsäure Die Art der eingesetzten Säure ist dabei abhängig von der Art der Behandlung der Metalloberfläche. So wird Phosphorsäure im Allgemeinen in Phosphatierungsbädem zur Phosphatierung von Stahl-Oberflächen eingesetzt. Die erfindungsgemäße Zusammensetzung ist in diesem Falle eine Phosphatierlösung. Dabei unterscheidet man zwischen sogenannten "nicht schichtbildenden" Phosphatierlösungen, das sind Lösungen, die keine zweiwertigen Metalle aufweisen. Solche "nicht schichtbildenden" Phosphatierlösungen liegen beispielsweise in Form einer Eisenphosphatierlösung vor. Enthalten die Phosphatierlösungen Ionen zweiwertiger Metalle, z. B. Zink und/oder Mangan, liegen die Phosphatierlösungen als sogenannte "schicht bildende" Phosphatierlösungen vor. Salpetersäure enthaltende Zusammensetzungen gemäß der vorliegenden Anmeldung sind insbesondere zur Oberflächenbehandlung von Zink und seinen Legierungen geeignet, während Flußsäure enthaltende Zusammensetzungen insbesondere zur Oberflächenbehandlung von Aluminium und seinen Legierungen geeignet sind.

Die Menge an eingesetzter Säure kann je nach Anwendungsgebiet variieren. Im allgemeinen werden 0,2 bis 700 g/l, bevorzugt 0,2 bis 500 g/l, besonders bevorzugt 2 bis 200 g/l, ganz besonders bevorzugt 5 bis 150 g/l der Komponente F eingesetzt.

### Komponente G

Die erfindungsgemäßen Zusammensetzungen können neben oder anstelle der Komponenten E mindestens einen weiteren Korrosionsinhibitor enthalten.

Geeignete Korrosionsinhibitoren sind ausgewählt aus der Gruppe bestehend aus Butindiol, Benztriazol, Aldehyden, Amincarboxylaten, Amino- und Nitrophenolen, Aminoalkoholen, Aminobenzimidazol, Aminoimidazolinen, Aminotriazol, Benzimidazolaminen, Benzothiazolen, Derivaten des Benztriazols, Borsäureestern mit verschiedenen Alkanolaminen wie beispielsweise Borsäurediethanolaminester, Carbonsäuren und ihren Estern, Chinolinderivaten, Dibenzylsulfoxid, Dicarbonsäuren und ihren Estern, Diisobutenylbernsteinsäure, Dithiophosphonsäure, Fettaminen und Fettsäureamiden, Guanidinderivaten, Harnstoff und seinen Derivaten, Laurylpyridiniumchlorid, Maleinsäureamiden, Mercaptobenzimidazol, N-2-Ethylhexyl-3-aminosulfopropionsäure, Phosphoniumsalzen, Phthalsäureamiden, Amin- und Natrium- neutralisierten Phosphorsäureestern von Alkylalkoholen sowie diesen Phosphorsäureestern selbst, Phosphorsäureestern von Polyalkoxylaten und hier insbesondere von Polyethylenglykol, Polyetheraminen, Sulfoniumsalzen, Sulfonsäuren wie beispielsweise Methansulfonsäure, Thioethern, Thioharnstoffen, Thiuramidsulfiden, Zimtsäure und ihren Derivaten, Zinkphosphaten und -silikaten, Zirkonphosphaten und -silikaten und Alkindiolalkoxylaten, insbesondere Butindiolethoxylat, Butindiolpropoxylat, Propargylalkoholethoxylat und Propargylalkoholpropoxylat.

Bevorzugt werden als weitere Korrosionsinhibitoren Butindiol und Benztriazol und Alkindiolalkoxylate wie Butindiolethoxylat, Butindiolpropoxylat, Propargylalkoholethoxylat und Propargylalkoholpropoxylat eingesetzt.

Die Korrosionsinhibitoren werden - falls sie überhaupt in den Zusammensetzungen eingesetzt werden - in einer Menge von im allgemeinen 0,01 bis 50 g/l, bevorzugt 0,1 bis 20 g/l, besonders bevorzugt 1 bis 10 g/l eingesetzt.

### Komponente H

Neben oder gegebenenfalls anstelle der genannten Komponenten können des weiteren Verbindungen des Ce, Ni, Co, V, Fe, Zn, Zr, Ca, Mn, Mo, W, Cr und/oder Bi eingesetzt werden. Im allgemeinen führt der erfindungsgemäße Einsatz der Komponente A in den Zusammensetzungen zu so guten Korrosionsschutzeigenschaften, dass der Zusatz der genannten Verbindungen nicht erforderlich ist, d. h. in einer Ausführungsform der Erfindung sind die Zusammensetzungen frei von Verbindungen gemäß Komponente H.

Die erfindungsgemäßen Zusammensetzungen sind Cr(VI)-frei. Falls die genannten Verbindungen (Komponente H) dennoch eingesetzt werden, werden bevorzugt Verbindungen ausgewählt aus Fe, Zn, Zr und Ca eingesetzt. Die Menge dieser Verbindungen in den erfindungsgemäßen Zusammensetzungen beträgt - falls diese Verbindungen überhaupt vorliegen - im allgemeinen 0,01 bis 100 g/l, bevorzugt 0,1 bis 50 g/l, besonders bevorzugt 1 bis 20 g/l.

### Komponente I

Neben einer oder mehreren der aufgeführten Komponenten E bis H können die erfindungsgemäßen Zusammensetzungen weitere Hilfs- und Zusatzstoffe enthalten. Geeignete Hilfs- und Zusatzstoffe sind unter anderem Leitfähigkeitspigmente oder leitfähige Füllstoffe z.B. Eisenphosphid, Vanadiumcarbid, Titannitrid, Ruß, Graphit, Molybdändisulfid oder mit Zinn oder Antimon dotiertes Bariumsulfat, wobei Eisenphosphid bevorzugt ist. Solche Leitfähigkeitspigmente oder leitfähige Füllstoffe werden den erfindungsgemäßen Zusammensetzungen zur Verbesserung der Schweißbarkeit der zu behandelnden Metalloberflächen oder zur Verbesserung einer nachfolgenden Beschichtung mit Elektrotauchlacken zugesetzt. Des weiteren können Kieselsäure-Suspensionen - insbesondere bei einer Verwendung der Zusammensetzungen zur Behandlung von Aluminium enthaltenden Oberflächen - eingesetzt werden.
Diese Hilfs- bzw. Zusatzstoffe liegen im allgemeinen in fein verteilter Form vor, d.h. ihre mittleren Teilchendurchmesser betragen im allgemeinen 0,005 bis 5 µm, bevorzugt 0,05 bis 2,5 µm. Die Menge der Hilfs- und Zusatzstoffe beträgt im allgemeinen 0,1 bis 50 bevorzugt 2 bis 35 Gew.-%, bezogen auf die Gesamtmasse der erfindungsgemäßen Zusammensetzungen.

### Komponente J

Die erfindungsgemäßen Zusammensetzungen können gegebenenfalls zusätzlich einen Komplexbildner enthalten. Geeignete Komplexbildner sind z.B. Ethylendiamintetraessigsäure (EDTA), Ethylendiamin (ED), Zitronensäure sowie Salze der genannten Verbindungen.

Die Menge der als Komplexbildner eingesetzten Verbindungen ist abhängig von der Salzfracht in den erfindungsgemäßen Zusammensetzungen und für den Fachmann problemlos durch z.B. Titration zu ermitteln.

### Komponente K

Neben den genannten Komponenten können die erfindungsgemäßen Zusammensetzungen weitere Additive enthalten. Geeignete Additive sind 1-(2-Vinylpyridinium)-2-ethylsulfobetain, 1,1-Dimethyl-2-propinyl-1-amin, 1-Pyridinium-2-ethylsulfobetain, 1-Pyridinium-2-hydroxy-3-propylsulfobetain, 1-Pyridinium-3-propylsulfobetain, 2,2'-Dichlordiethylether, 2,5-Dimethyl-3-hexin-2,5-diol, 2-Butin-1,4-diol, 2-Butin-1,4-diolethoxylat, 2-Butin-1,4-diolpropoxylat, 3-(2-Benzothiazolylthio)-1-propansulfonsäure-Na-Salz, 3,3'-Dithio-bis-(1-propansulfonsäure)-Na-Salz, 3[(Aminoiminomethyl]-thiol]-1-propansulfonsäure, 3-[(Dimethylamino)-thioxomethylthio]-1-propansulfonsäure-Na-Salz, 3-[Ethoxy-thioxomethylthio]-1-propansulfonsäure-K-Salz, 3-Chlor-2-hydroxy-1-propansulfonsäure-Na-Salz, 3-Hexin-2,5-diol, 3-Mercapto-1-propansulfonsäure-Na-Salz, 4,4'-Dihydroxydiphenylsulfon, 4-Methoxybenzaldehyd, Aldehyde, Alkylphenylpolyethylenoxidsulfopropylether-K-Salze, Alkylpolyethylenoxidsulfoproylether-K-Salze wie beispielsweise Tridecyl/Pentadecylpolyethylenoxidsulfoproylether-K-Salz, Allylsulfonsäure-Na-salz, Amidosulfonsäure, Amin- und Natrium- neutralisierte Phosphorsäureester von Alkylalkoholen, Amincarboxylate, Amino- und Nitrophenole, Aminoalkohole, Aminobenzimidazol, Aminoimidazoline, Aminotriazol, Benzylacetessigsäuremethylester, Benzylaceton, Benzimidazolamine, Benzothiazole, Benztriazol und seine Derivate, Benzylpyridin-3-carboxylat, Bisphenol A, Borsäureester mit verschiedenen Alkanolaminen wie beispielsweise Borsäurediethanolaminester, Carbonsäuren und ihre Ester, Carboxyethylisothiuroniumbetain, Chinolinderivate, Copolymere aus Ethylen und Acrylsäure, Copolymere aus Imidazol und Epichlorhydrin, Copolymere aus Imidazol, Morpholin und Epichlorhydrin, Copolymere aus N,N'-bis-[3-(dimethylamino)propyl]-harnstoff und 1,1'-Oxybis-[2-chlorethan], Copolymere aus n-Butylacrylat, Acrylsäure und Styrol, Dibenzylsulfoxid, Dicarbonsäuren und ihre Ester, Diethylentriaminpentaessigsäure und davon abgeleitete Salze, Diisobutenylbernsteinsäure, Dinatriumethylenbisdithiocarbamat, Dithiophosphonsäure, Ethylamidosulfonsäure, Ethylendiamintetraessigsäure und davon abgeleitete Salze, Ethylglycindiessigsäure und davon abgeleitete Salze, Ethylhexanolethoxylat, Fettamine und Fettsäureamide, Formaldehyd, Glycerinethoxylat, Guanidinderivate, Harnstoff und seine Derivate, Hydroxyethyliminodiessigsäure und davon abgeleitete Salze, Imidazol, Isopropylamidosulfonsäure, Isopropylamidosulfonylchlorid, Lauryl/Myristyltrimethylammonium-Methosulfat, Laurylpyridiniumchlorid, Maleinsäureamide, Mercaptobenzimidazol, Methylamidosulfonsäure, N,N,N',N'-Tetrakis(2-hydroxylpropyl)ethylendiamin, N,N-Diethyl-2-propin-1-amin, N,N-Diethyl-4-amino-2-butin-1-ol, N,N-Dimethyl-2-propin-1-amin, N-2-Ethylhexyl-3-aminosulfopropionsäure, N-Allylpyridiniumchlorid, Na-Salz sulfatierter Alkylphenolethoxylate, Natrium-2-ethylhexylsulfat, Nicotinsäure, Nitrilotriessigsäure und davon abgeleitete Salze, Nitrobenzolsulfonsäure-Na-Salz , N-Methallylpyridiniumchlorid, ortho-Chlorbenzaldehyd, Phosphoniumsalze, Phthalsäureamide, Picolinsäure, Polyetheramine, Polyethylenimine, Polyvinylimidazol, Propargylalkohol, Propargylalkoholethoxylat, Propargylalkoholpropoxylat, Propinsulfonsäure-Na-salz, Propiolsäure, Propylendiamintetraessigsäure und davon abgeleitete Salze, Pyrrol, Quaterniertes Polyvinylimidazol, Reaktionsprodukt aus 2-Butin-1,4-diol und Epichlorhydrin.

Die erfindungsgemäßen Zusammensetzungen können weiterhin Additive zur Verbesserung des Umformverhaltens enthalten, beispielsweise wachsbasierte Derivate auf Basis von natürlichen oder synthetischen Wachsen, z.B. Wachse basierend auf Acrylsäure, Polyethylen-, Polytetrafluorethylen (PTFE)-Wachse oder Wachsderivate oder Paraffine und ihre Oxidationsprodukte.

In Abhängigkeit von ihrem Anwendungsbereich können die erfindungsgemäßen Zusammensetzungen Polymerdispersionen basierend auf Styrol, 4-Hydroxystyrol, Butadien, Acrylsäure, Acrylsäureestern, Acrylsäureamiden, Acrylaten, Methacrylsäure, Methacrylsäureestern, Methacrylsäureamiden, Methacrylaten und Derivaten des Acrylamids enthalten. Weiterhin ist es möglich, dass die erfindungsgemäßen Zusammensetzungen Polyurethandispersionen und Polyesterurethandispersionen oder Polyharnstoffdispersionen enthalten.

Eine weitere Gruppe von Verbindungen, die in den erfindungsgemäßen Zusammensetzungen vorliegen können sind Polyethylenglycole, Polypropylenglycole, Copolymerisate des Ethylenoxids und des Propylenoxids untereinander und mit weiteren Alkoxylaten, wie Butenoxid.

Die erfindungsgemäßen Zusammensetzungen enthaltend die Komponente A können in allen Anwendungen zur Passivierung von Metalloberflächen eingesetzt werden. Solche Anwendungen sind die Ausbildung einer Passivierungsschicht (Konversionsschichtbildung), insbesondere No-Rinse-Konversionsschichtbildung, also Verfahren mit verringerter Anzahl von Spüloperationen, beispielsweise auf verzinktem Stahl und Aluminium. Dabei entspricht die Art der Applikation technisch üblichen Methoden mit der Ergänzung, dass die erfindungsgemäßen Zusammensetzungen gemeinsam mit für die entsprechende Anwendung technisch üblichen weiteren Komponenten eingesetzt werden oder dass sie in zusätzlichen Behandlungsschritten mit dem Metall in Kontakt gebracht werden, wie beispielsweise Sprühen, Walzen, Tauchen, Lackieren oder Elektrotauchlackieren unter Verwendung geeigneter Formulierungen der erfindungsgemäßen Zusammensetzungen wie Lösungen, Emulsionen, Dispersionen, Suspensionen oder Aerosole.

Ein weiterer Gegenstand der vorliegenden Anmeldung ist eine Passivierungsschicht auf einer Metalloberfläche, bevorzugt A1, Al-Legierungen, Zn, Zn-Legierungen, erhältlich durch in Kontakt bringen der Metalloberfläche mit der erfindungsgemäßen Zusammensetzung.

Bevorzugte Ausführungsformen der erfindungsgemäßen Zusammensetzung sowie der in der Zusammensetzung enthaltenen Komponenten und bevorzugte Ausführungsformen der Metalloberfläche sind bereits vorstehend genannt.

Die erfindungsgemäße Passivierungsschicht genügt den folgenden Anforderungen:
- sie ist - für viele Anwendungen auch ohne nachfolgende Lackierung - korrosionsinhibierend;
- sie verbessert die Lackhaftung, das heißt sie ist nicht hydrophobierend, was dadurch erreicht wird, dass die in den erfindungsgemäßen Zusammensetzungen als Komponente A eingesetzten Copolymere vollständig hydrophil sind;
- sie ist dünn, so dass die Maßhaltigkeit der passivierten Werkstücke gewährleistet ist;
- auch bei erhöhter Temperatur von 120°C wirkt die erfindungsgemäße Passivierungsschicht noch korrosionsinhibierend;
- sie ist gegenüber dem Grundmetall (Metalloberfläche) farbneutral, ist jedoch mit dem Auge erkennbar, so dass die Detektion von Defekten erleichtert ist und eine einfache Unterscheidung von passivierten und nicht passivierten Teilen getroffen werden kann;
- sie ist ohne komplizierte Verfahrensschritte erhältlich.

Ein besonderes Merkmal der erfindungsgemäßen Passivierungsschicht ist, dass sie bereits in Form einer sehr dünnen Schicht eine hervorragende korrosionsinhibierende Wirkung aufweist.

Die Schichtdicke der erfindungsgemäßen auf der Metalloberfläche gebildeten Passivierungsschicht beträgt bevorzugt ≤3µm. Besonders bevorzugt beträgt die Schichtdicke 0,01 bis 3 µm, ganz besonders bevorzugt 0,1 bis 3 µm. Die Dicke der Schicht wird dabei durch Differenzwägung vor und nach Einwirkung der erfindungsgemäß eingesetzten Zusammensetzung auf die Metalloberfläche unter der Annahme, dass die Schicht eine spezifische Dichte von 1 kg/l aufweist, ermittelt. Im Folgenden wird unter "Schichtdicke" immer eine derartig ermittelte Größe verstanden, unabhängig davon, welche spezifische Dichte die Schicht tatsächlich aufweist. Diese dünnen Schichten genügen, um einen hervorragenden Korrosionsschutz zu erzielen. Durch solche dünnen Schichten ist die Maßhaltigkeit der passivierten Werkstücke gewährleistet.

In einer ganz besonders bevorzugten Ausführungsform enthält die erfindungsgemäße Passivierungsschicht außer den Metallen des Grundmetalls, insbesondere Aluminium und Zink bzw. Legierungsmetallen mit Aluminium oder Zink, keine weiteren Metalle, das bedeutet, dass die zur Herstellung der Passivierungsschicht eingesetzten Zusammensetzungen keine Metalle oder Metallverbindungen enthalten. Bereits ohne den Zusatz weiterer Metalle oder Metallverbindungen werden bei Einsatz der erfindungsgemäßen Zusammensetzungen enthaltend Copolymere gemäß Komponente A Passivierungsschichten erhalten, die eine hervorragende Korrosionsstabilität aufweisen.

Ein weiterer Gegenstand der vorliegenden Anmeldung ist eine Oberfläche aufgebaut aus einer Metalloberfläche und der erfindungsgemäßen Passivierungsschicht. Geeignete und bevorzugt eingesetzte Metalloberflächen sowie Passivierungsschichten sind bereits vorstehend erwähnt.

Ein weiterer Gegenstand der vorliegenden Anmeldung ist ein Verfahren zur Ausbildung der erfindungsgemäßen Passivierungsschicht auf einer Metalloberfläche, wobei die Metalloberfläche mit der erfindungsgemäßen Zusammensetzung in Kontakt gebracht wird. Geeignete Zusammensetzungen sowie bevorzugte Ausführungsformen geeigneter Zusammensetzungen sind bereits vorstehend erwähnt. Geeignete Metalloberflächen sowie bevorzugte Ausführungsformen der Metalloberflächen sind ebenfalls bereits vorstehend erwähnt.

Das erfindungsgemäß eingesetzte Copolymer (Komponente A) kann in den in dem erfindungsgemäßen Verfahren eingesetzten Zusammensetzungen in Lösung, Emulsion, Suspension oder als Aerosol vorliegen. Bevorzugt liegt das Copolymer (Komponente A) in den erfindungsgemäßen Zusammensetzungen in wässriger Lösung vor.

Die Art der Applikation entspricht technisch üblichen Methoden. Bevorzugt erfolgt das in Kontakt Bringen der Metalloberfläche mit erfindungsgemäßen Zusammensetzungen durch Aufsprühen der Zusammensetzung auf die Metalloberfläche oder Tauchen der Metalloberfläche in die Zusammensetzung. Die jeweils besonders bevorzugt angewendete Applikationsmethode ist abhängig von der Zahl, Größe und Form der zu behandelnden Teile. Demgemäß erfolgt das In Kontakt Bringen bevorzugt mittels eines Sprüh-, Walz- oder Tauchverfahrens.

Wird die erfindungsgemäße Passivierungsschicht durch Phosphatierung auf Metallbänder aufgebracht, so können Zusammensetzungen gemäß der vorliegenden Anmeldung enthaltend Phosphorsäure als Komponente F durch ein "Roll-on"- oder "-Dry-place"- oder "No-rinse"-Verfahren aufgebracht werden, wobei die erfindungsgemäß festgesetzte Phosphatierzusammensetzung auf das Metallband aufgebracht wird und ohne Spülung getrocknet wird, wobei sich ein Polymerfilm ausbildet.

Ein weiterer Gegenstand der vorliegenden Anmeldung ist ein Verfahren umfassend die Schritte:
a) gegebenenfalls Reinigung der Oberfläche des Grundmetalls zur Entfernung von Ölen, Fetten und Schmutz,
b) gegebenenfalls Waschen mit Wasser,
c) gegebenenfalls Pickling, um Rost oder andere Oxide zu entfernen,
d) gegebenenfalls Waschen mit Wasser,
e) In Kontakt Bringen der Metalloberfläche mit einer Zusammensetzung, die ein Copolymer (Komponente A) enthält, aufgebaut aus
   ea) 50 bis 99,9 Gew.-% (Meth)acrylsäure oder deren Salzen als Komponente Aa
   eb) 0,1 bis 50 Gew.-% Phosphor- und/oder Phosphonsäure oder deren Salze enthaltende Gruppen aufweisende Monomere, die mit den unter ea) und ec) genannten Monomeren polymerisierbar sind, als Komponente Ab,
   ec) 0 bis 30 Gew.-% weiteren Comonomeren, die mit den unter ea) und eb) genannten Monomeren polymerisierbar sind, als Komponente Ac;
f) gegebenenfalls Waschen mit Wasser,
g) gegebenenfalls Nachbehandlung.

Das In Kontakt Bringen der Metalloberfläche mit dem Copolymer (Komponente A) ist dabei der Passivierungsschritt, insbesondere ein Phosphatierungsschritt, der nach dem Fachmann bekannten Verfahren erfolgt. Dabei entsteht auf dem Metall die erfindungsgemäße Passivierungsschicht. Wird in Schritt e) eine Phosphatierung durchgeführt, ist eine Nachbehandlung der Metalloberfläche in g) mit passivierenden Zusätzen möglich. Bevorzugt erfolgt in Schritt e) ein in Kontakt Bringen mit der erfindungsgemäßen Zusammensetzung.

Bevorzugt eingesetzte Copolymere (Komponente A) und bevorzugt eingesetzte Zusammensetzungen wurden bereits vorstehend benannt.

Ein Waschen mit Wasser erfolgt zwischen den einzelnen Verfahrensschritten, um eine Verunreinigung der für den jeweils folgenden Schritt erforderlichen Lösung mit Komponenten der in dem vorhergegangenen Schritt eingesetzten Lösung zu vermeiden. Es ist jedoch auch denkbar, erfindungsgemäße Verfahren als "No-Rinse-Verfahren" durchzuführen, d.h. ohne die Stufen b), d) und f).

In dem so genannten "No-Rinse"-Verfahren wird die erfindungsgemäß eingesetzte Zusammensetzung im Allgemeinen entweder auf die Oberfläche des Grundmetalls aufgesprüht oder durch Auftragssalzen auf die Oberfläche übertragen. Danach erfolgt nach einer Einwirkdauer, die im Allgemeinen im Bereich von 2 bis 20 Sekunden liegt, ohne weitere Zwischenspülung ein Eintrocknen der erfindungsgemäß eingesetzten Zusammensetzung. Dies kann zum Beispiel in einem beheizten Ofen erfolgen.

Die Schritte des Reinigens (Schritt a)) und des In Kontakt Bringens der Metalloberfläche in Anwesenheit des erfindungsgemäß eingesetzten Copolymers (Komponente A) bzw. der erfindungsgemäßen Zusammensetzung (Schritt e)) können auch in einem Schritt durchgeführt werden, d.h. mit einer Formulierung, die neben den üblichen Reinigungsmitteln auch das erfindungsgemäß eingesetzte Copolymer enthält.

Das erfindungsgemäße Verfahren erfolgt im Allgemeinen bei einer Temperatur von 5 bis 100 °C, bevorzugt von 10 bis 80°C, besonders bevorzugt 15 bis 45 °C.

Ein weiterer Gegenstand der vorliegenden Anmeldung ist die Verwendung einer Zusammensetzung enthaltend
a) mindestens ein Polymer als Komponente A aufgebaut aus
   aa) 50 bis 99,9 Gew.-% (Meth)acrylsäure oder deren Salzen als Komponente Aa
      und
   ab) 0,1 bis 50 Gew.-% Phosphor- und/oder Phosphonsäure oder deren Salze enthaltende Gruppen aufweisende Monomere, die mit den unter aa) und ac) genannten Monomeren polymerisierbar sind, als Komponente Ab,
   ac) 0 bis 30 Gew.-% weiteren Comonomeren, die mit den unter aa) und ab) genannten Monomeren polymerisierbar sind, als Komponente Ac;
b) Wasser oder ein Gemisch aus Wasser und einem oder mehreren wasserlöslichen Lösungsmitteln, wobei der Wasseranteil mindestens 75 Gew.-% beträigt, und das geeignet ist, das Polymer (Komponente A) zu lösen, zu dispergieren, zu suspendieren oder zu emulgieren, als Komponente B;
c) mindestens eine Säure oder mindestens ein Alkali- oder Erdalkalimetallsalz der entsprechenden Säure ausgewählt aus der Gruppe bestehend aus Phosphorsäure, Schwefelsäure, Sulfonsäuren, Ameisensäure, Essigsäure, Salpetersäure, Flussäure und Salzsäure als Komponente F,
zur Passivierung einer Metalloberfläche.

Bevorzugt eingesetzte Zusammensetzungen sowie in den Zusammensetzungen bevorzugt eingesetzte Copolymere (KomponenteA) sind bereits vorstehend genannt. Bevorzugt eingesetzte Metalloberflächen sowie bevorzugt durchgeführte Verfahren zur Passivierung der Metalloberfläche sind ebenfalls bereits vorstehend genannt.

Im Anschluss an das Verfahren zur Ausbildung einer Passivierungsschicht auf einer Metalloberfläche kann, in einer bevorzugten Ausführungsform des erfindungsgemäßen Verfahrens im Anschluss an die Verfahrensschritte a) bis g) die mit der erfindungsgemäßen Passivierungsschicht versehene Metalloberfläche mit einem Lack versehen werden. Die Lackierung erfolgt dabei nach dem Fachmann bekannten Verfahren. Als Lack kann dabei zum Beispiel ein Pulverlack oder ein elektrolytisch, insbesondere kathodisch abschaltbarer Tauchlack eingesetzt werden.

Ein weiterer Gegenstand der vorliegenden Anmeldung ist somit ein Lackaufbau auf einer Oberfläche eines Grundmetalls umfassend mindestens eine erfindungsgemäße Passivierungsschicht X und mindestens eine Lackschicht, bevorzugt mehrere Lackschichten, als Schicht(en) Y.

Die Passivierungsschicht und bevorzugte Ausführungsformen der Passivierungsschicht sind bereits vorstehend genannt. Geeignete Lackschichten sind dem Fachmann bekannt.

Der erfindungsgemäße Lackaufbau kann eine Mehrschichtlackierung (mehrere Lackschichten) mit weiteren Schichten enthalten. Beispielsweise kann eine Mehrschichtlackierung aus mindestens einer der folgenden Schichten aufgebaut sein, die typischerweise folgendermaßen angeordnet sein können:
- eine pigmentierte und/oder mit Effektstoffen versehene Schicht W,
- eine Schicht Z, ausgewählt aus der Gruppe Primer, Basislack, Grundierung, pigmentierter Lack oder mit Effektstoffen versehener Lack.

Als farb- und/oder effektgebende Lacke in der Schicht Z und/oder W kommen im Grunde alle für diese Zwecke üblichen und dem Fachmann bekannten Lacke in Betracht. Diese können physikalisch, thermisch, mit aktinischer Strahlung oder thermisch und mit aktinischer Strahlung (dual-cure) härtbar sein. Es kann sich um konventionelle Basislacke, Wasserbasislacke, im wesentlichen lösemittel- und wasserfreie flüssige Basislacke (100%-Systeme), im wesentlichen lösemittel- und wasserfreie feste Basislacke (pigmentierte Pulverlacke) oder im wesentlichen lösemittelfreie pigmentierte Pulverlackdispersionen (Pulverslurry-Basislacke) handeln. Sie können thermisch oder DualCure-härtbar sein, und selbst- oder fremdvernetzend.

Es können einer oder mehrere, bevorzugt 1 bis , besonders bevorzugt 1 bis 2 und ganz besonders bevorzugt ein farb- und/oder effektgebender Lack in den Schichten eingesetzt werden.

Im Wesentlichen lösemittelfrei bedeutet, dass der betreffende Beschichtungsstoff einen Restgehalt an flüchtigen Lösemitteln von < 2,0 Gew.-%, bevorzugt < 1,5 Gew.-% und besonders bevorzugt < 1,0 Gew.-% hat. Es ist von ganz besonderem Vorteil, wenn der Restgehalt unterhalb der gaschromatographischen Nachweisgrenze liegt.

Besonders bevorzugt werden in den Mehrschichtlackierungen Wasserbasislacke angewandt, wie sie aus den Patentanmeldungen EP 0 089 497 A1, EP 0 256 540 A1, EP 0 260 447 A1, EP 0 297 576 A1, WO 96/12747, EP 0 523 610 A1, EP 0 228 003 A1, EP 0 397 806 A1, EP 0 574 417 A1, EP 0 531 510 A1, EP 0 581 211 A1, EP 0 708 788 A1, EP 0 593 454 A1, DE-A-43 28 092 A1, EP 0 299 148 A1, EP 0 394 737 A1, EP 0 590 484 A1, EP 0 234 362 A1, EP 0 234 361 A1, EP 0 543 817 A1, WO95/14721, EP 0 521 928 A1, EP 0 522 420 A1, EP 0 522 419 A1, EP 0 649 865 A1, EP 0 53 6 712 A1, EP 0 596 460 A1, EP 0596461 A1, EP 0 584 818 A1, EP 0 669 356 A1, EP 0 634 431 A1, EP 0 678 536 A1, EP 0 354 261 A1, EP 0 424 705 A1, WO 97/49745, WO 97/49747, EP 0 401 565 A1 oder EP 0 817 684, Spalte 5, Zeilen 31 bis 45, bekannt sind.

Die vorstehend beschriebenen farb- und/oder effektgebenden Lacke können nicht nur der Herstellung von farb- und/oder effektgebenden Basislackierungen, sondern auch von farb- und/oder effektgebenden Kombinationseffektschichten dienen. Hierunter ist eine Lackierung zu verstehen, die in einer farb- und/oder effektgebenden Mehrschichtlackierung mindestens zwei Funktionen erfüllt. Funktionen dieser Art sind insbesondere der Schutz vor Korrosion, die Haftvermittlung, die Absorption mechanischer Energie und die Farb- und/oder Effektgebung. Vor allem dient die Kombinationseffektschicht der Absorption mechanischer Energie sowie der Farb- und/oder Effektgebung zugleich; sie erfüllt also die Funktionen einer Füllerlackierung oder Steinschlagschutzgrundierung und einer Basislackierung. Vorzugsweise hat die Kombinationseffektschicht darüber hinaus noch Korrosionsschutzwirkung und/oder haftvermittelnde Wirkung.

Typische Dicken der Schicht (W) und/oder (Z) reichen von 0,1 bis 2000 µm, bevorzugt 0,5 bis 1000 µm, besonders bevorzugt von 1 bis 500 µm, ganz besonders bevorzugt von 1 bis 250 µm und insbesondere von 10 bis 100 µm.

Die in den Mehrschichtlackierungen einsetzbaren Lacke können farb- und/oder effektgebende Pigmente enthalten. Als farbgebende Pigmente sind alle lacküblichen Pigmente organischer oder anorganischer Natur geeignet. Beispiele für anorganische oder organische Farbpigmente sind Titandioxid, mikronisiertes Titandioxid, Eisenoxidpigmente, Ruß, Azopigmente, Phthalocyaninpigmente, Chinacridon- und Pyrrolopyrrolpigmente.

Die Effektpigmente zeichnen sich insbesondere durch einen plättchenartigen Aufbau aus. Beispiele für Effektpigmente sind: Metallpigmente, z.B. aus Aluminium, Kupfer oder anderen Metallen; Interferenzpigmente, wie z.B. metalloxidbeschichtete Metallpigmente, z.B. titandioxidbeschichtetes oder mischoxidbeschichtetes Aluminium, beschichteter Glimmer, wie z.B. titandioxidbeschichteter Glimmer und Graphiteffektpigmente. Vorteilhaft können, beispielsweise zur Verbesserung der Härte, UV-härtbare Pigmente und gegebenenfalls auch Füllstoffe eingesetzt werden. Es handelt sich hierbei um mit strahlungshärtbaren Verbindungen, z.B. acrylfunktionellen Silanen, gecoatete Pigmente/Füllstoffe, die somit in den Strahlenhärteprozeß mit einbezogen werden können.

Der erfindungsgemäße Lackaufbau wird im Allgemeinen durch ein Verfahren umfassend die Schritte:
a) Ausbildung einer Passivierungsschicht X gemäß einem vorstehend genannten Verfahren zur Ausbildung der Passivierungsschicht;
b) Lackieren der Passivierungsschicht,
hergestellt.

Ein Verfahren zur Ausbildung der Passivierungsschicht sowie bevorzugte Ausführungsformen dieses Verfahrens sind bereits vorstehend genannt. Als Schritt b) geeignete Lackierungsverfahren sind dem Fachmann bekannt.

Die nachfolgenden Beispiele erläutern die Erfindung zusätzlich.

### Beispiele

### Vergleichsbeispiele:

Prüfbleche (verzinkter Stahl, 20 µm Zink) wurden nach einer in Tabelle 1 genannten Passivierungsmethode passiviert. Die Standzeit wurde im Salzsprühtest bestimmt.

### Salzsprühtest

Als Maß der korrosionsinhibierenden Wirkung dient das Ergebnis eines Salzsprühtests nach DIN 50021. Je nachdem, welche Art von Korrosionsschaden beobachtet wird, wird die Standzeit im Korrosionstest unterschiedlich definiert.
- Bilden sich weiße Flecken von im Allgemeinen mehr als 1 mm Durchmesser (Zn- oder Al-Oxid, sogenannter Weißrost), so wird die Standzeit als die Zeit angegeben, nach der das Schadbild dem Bewertungsgrad 8 in DIN EN ISO 10289 vom April 2001, Anhang B, Seite 19, entspricht.
- Bilden sich schwarze Flecken von im Allgemeinen weniger als 1 mm Durchmesser (insbesondere auf mit einer Passivierungsschicht versehenen Zink), bevor sich Weißrostflecken bilden, so wird die Standzeit als die Zeit angegeben, nach der das Schadbild dem Bewertungsgrad 8 in DIN EN ISO 10289 vom April 2001, Anhang A, Seite 9, entspricht.

**Tabelle 1**

| | | |
|---|---|---|
| | Passivierungsmethode | Standzeit |
| Vergleichsbeispiel | Passivierung in HNO₃, 0,1 % | < 1 h |
| Vergleichsbeispiel | Handelsübliche Cr(III) Dickschichtpassivierung (EP-A 0 907 762) | >> 10 h |

Die in Tabelle 2 genanten Reagenzien werden mit der Konzentration C in 0,1%iger HNO₃ gelöst. Prüfbleche (verzinkter Stahl, 20 µm Zink) werden für 1 Minute in die Lösung eingetaucht und durch Aufhängen über Nacht getrocknet. Die durch Differenzwägung ermittelten Schichtdicken betragen zwischen 1 und 3 µm. Die Standzeit wird im Salzsprühtest bestimmt.

### Differenzwägung

Die Dicke der Schicht wird durch Differenzwägung vor und nach Einwirken der erfindungsgemäß eingesetzten Zusammensetzung auf die Metalloberfläche und unter der Annahme, dass die Schicht eine spezifische Dichte von 1 kg/l aufweist, ermittelt. Im Folgenden wird unter "Schichtdicke" immer eine derartig ermittelte Größe verstanden, unabhängig davon, welche spezifische Dichte die Schicht tatsächlich aufweist.

**Tabelle 2**

| Beispiel | Reagenz | C [Gew.-%] | Standzeit [h] |
|---|---|---|---|
| Vergleichsbeispiel 1 | Acrylsäure/Methacrylsäure-Copolymer, umgesetzt mit je 1 mol 3-Dimethylamino-propylamin je Carboxylat-gruppe | 5 | < 1 |
| Vergleichsbeispiel 2 | Acrylsäure/Methacrylsäure-Copolymer, umgesetzt mit je 1 mol Diethylentriamin je Carboxylatgruppe | 5 | < 1 |
| Vergleichsbeispiel 3 | Acrylsäure/Methacrylsäure-Copolymer, umgesetzt mit je 1 mol Imidazol je Carboxylatgruppe | 5 | < 1 |
| Vergleichsbeispiel 4 | Polyvinylpyrrolidon K-Wert 30 (DE-A10005113) | 5 | < 1 |

| | | | |
|---|---|---|---|
| * Der K-Wert ist die Fikentscher-Konstante zur Kennzeichnung des mittleren Molekulargewichts, vgl. H.-G. Elias, Makromoleküle Bd. 1, 5. Auflage, Hüthig & Wepf Verlag, Basel 1990, Seite 99. | | | |

Beim Vergleich von nicht behandelten mit behandelten (d.h. mit einer erfindungsgemäßen Passivierungsschicht versehenen Blechen) wird eine Verdreifachung der Standzeit im Korrosionstest als sicherer Hinweis auf korrosionsinhibierende Wirkung verstanden.

Durch Eintauchen bei höherer Temperatur (z.B. bei 60°C) oder in konzentriertere Lösungen, auch in Salpetersäure von veränderter gegenüber den oben genannten Beispielen, kann die Standzeit im Korrosionstest noch weiter verbessert werden.

## Patentansprüche

1. Cr(VI)-freie Zusammensetzung zur Behandlung von Metalloberflächen mit einem pH-Wert von 1 bis 6 enthaltend
a) mindestens ein Copolymer als Komponente A aufgebaut aus
aa) 50 bis 99,9 Gew.-% (Meth)acrylsäure oder deren Salzen, als Komponente Aa;
und
ab) 0,1 bis 50 Gew.-% Phosphor- und/oder Phosphonsäure oder deren Salze enthaltende Gruppen aufweisende Monomere als Komponente Ab, die mit den unter aa) und ac) genannten Monomeren polymerisierbar sind, sowie
ac) 0 bis 30 Gew.-% weiteren Comonomeren, die mit den unter aa) und ab) genannten Monomeren polymerisierbar sind, als Komponente Ac;
b) Wasser oder ein Gemisch aus Wasser und einem oder mehreren wasserlöslichen Lösungsmitteln, wobei der Wasseranteil mindestens 75 Gew. % beträgt, und das geeignet ist, das Polymer (Komponente A) zu lösen, zu dispergieren, zu suspendieren oder zu emulgieren, als Komponente B;
c) mindestens eine Säure oder mindestens ein Alkali- oder Erdalkalimetallsalz der entsprechenden Säure ausgewählt aus der Gruppe bestehend aus Phosphorsäure, Schwefelsäure, Sulfonsäuren, Ameisensäure, Essigsäure, Salpetersäure, Flusssäure und Salzsäure als Komponente F.

2. Zusammensetzung gemäß Anspruch 1 enthaltend zusätzlich zu den Komponenten A, B und F Verbindungen des Ce, Ni, Co, V, Fe, Zn, Zr, Ca, Mn, Mo, W, Cr und/oder Bi, als Komponente H.

3. Zusammensetzung gemäß Anspruch 2, **dadurch gekennzeichnet, dass** die Komponente H aus Verbindungen des Fe, Zn, Zr und Ca ausgewählt wird.

4. Zusammensetzung nach einem der Ansprüche 1 bis 3 enthaltend zusätzlich zu den Komponenten A, B, F und gegebenenfalls H wachsbasierte Derivate auf Basis von natürlichen oder synthetischen Wachsen.

5. Zusammensetzung gemäß Anspruch 4, **dadurch gekennzeichnet dass** es sich bei den Wachsen um Wachse auf Basis von Acrylsäure, Polyethylen-, Polytetrafluor (PTFE)-Wachse, Wachsderivate oder Paraffine und ihre Oxidationsprodukte handelt.

6. Zusammensetzung gemäß einem der Ansprüche 1 bis 5, **dadurch gekennzeichnet, dass** es sich bei Sulfonsäuren als Komponente F um eine ausgewählt aus der Gruppe von Methansulfonsäure, Vinylsulfonsäure, Allylsulfonsäure, m-Nitrobenzolsulfonsäure, Naphthalinsulfonsäure oder Derivaten davon handelt.

7. Zusammensetzung gemäß einem der Ansprüche 1 bis 6, **dadurch gekennzeichnet, dass** die Komponente Aa Acrylsäure oder ein Salz der Acrylsäure und die Komponente Ab Vinylphosphonsäure oder Methacrylsäure(phosphonoxyethyl)ester ist.

8. Zusammensetzung gemäß einem der Ansprüche 1 bis 7, **dadurch gekennzeichnet, dass** die Menge an Acrylsäure 50 bis 90 Gew. % beträgt.

9. Zusammensetzung nach einem der Ansprüche 1 bis 8 enthaltend zusätzlich zu den Komponenten A, B, F, gegebenenfalls H und gegebenenfalls K
a) oberflächenaktive Additive, Dispergiermittel, Suspendiermittel und/oder Emulgiermittel als Komponente C
und/oder
b) mindestens eine stickstoffhaltige Base als Komponente D
und/oder
c) mindestens ein Salz, eine Säure oder eine Base basierend auf Übergangsmetallkationen, Übergangsmetalloxoanionen, Fluorometallaten oder Lanthanoiden, als Komponente E,
und/oder
d) mindestens einen weiteren Korrosionsinhibitor, als Komponente G,
und/oder
e) weitere Hilfs- und Zusatzstoffe, als Komponente I,
und/oder
f) mindestens einen Komplexbildner als Komponente J,
und/oder
g) weitere Additive, als Komponente K.

10. Zusammensetzung gemäß Anspruch 9, **dadurch gekennzeichnet, dass** es sich bei der Komponente C um Tenside ausgewählt aus der Gruppe von Alkyl- und Alkenylalkoxylaten der allgemeinen Formel R-EOₙ/POₘ, Alkylphenolethoxylate, EO/PO-Blockcopolymere, Alkylethersulfate oder Alkylammoniumsalze handelt, wobei EO eine Ethylenoxideinheit, PO für eine Propylenoxideinheit und R für einen linearen oder verzweigten C₆ bis C₃₀-Alkylrest, und wobei n und m unabhängig voneinander größer als 1 und kleiner 100 sind, mit der Maßgabe, dass die EO- und PO-Einheiten in den Verbindungen R-EOₙ/POₘ in beliebiger Reihenfolge angeordnet sein können.

11. Zusammensetzung gemäß Anspruch 9, **dadurch gekennzeichnet, dass** es sich bei dem Korrosionsinhibitor G um mindestens einen ausgewählt aus der Gruppe von Butindiol, Benztriazol, Aldehyden, Amincarboxylaten, Amino- und Nitrophenolen, Aminoalkoholen, Aminobenzimidazol, Aminoimidazolinen, Aminotriazol, Benzimidazolaminen, Benzothiazolen, Derivaten des Benztriazols, Borsäureestern mit verschiedenen Alkanolaminen, Carbonsäuren und ihren Estern, Chinolinderivaten, Dibenzylsulfoxid, Dicarbonsäuren und ihren Estern, Diisobutenylbernsteinsäure, Dithiophosphonsäure, Fettaminen und Fettsäureamiden, Guanidinderivaten, Harnstoff und seinen Derivaten, Laurylpyridiniumchlorid, Maleinsäureamiden, Mercaptobenzimidazol, N-2-Ethylhexyl-3-aminosulfopropionsäure, Phosphoniumsalzen, Phthalsäureamiden, Amin- und Natrium- neutralisierten Phospborsäureestem von Alkylalkoholen sowie diesen Phosphorsäureestern selbst, Phosphorsäureestern von Polyalkoxylaten, Polyetheraminen, Sulfoniumsalzen, Sulfonsäuren, Thioethern, Thioharnstoffen, Thiuramidsulfiden, Zimtsäure und ihren Derivaten, Zinkphosphaten und -silikaten, Zirkonphosphaten und -silikaten und Alkindiolalkoxylaten handelt.

12. Zusammensetzung gemäß Anspruch 9, **dadurch gekennzeichnet, dass** es sich bei dem Korrosionsinhibitor G um mindestens einen ausgewählt aus der Gruppe von Butindiol, Benztriazol oder Alkindiolalkoxylaten handelt.

13. Zusammensetzung gemäß Anspruch 9, **dadurch gekennzeichnet, dass** es sich bei der Komponente I um ein Leitfähigkeitspigment handelt.

14. Zusammensetzung gemäß Anspruch 9, **dadurch gekennzeichnet, dass** es sich bei der Komponente J um einen Komplexbildner handelt.

15. Chrom(VI)-freies Verfahren zur Ausbildung einer Passivierungsschicht auf einer Metalloberfläche, wobei die Metalloberfläche mit einer Zusammensetzung gemäß einem der Ansprüche 1 bis 14 in Kontakt gebracht wird.

16. Verfahren gemäß Anspruch 15, **dadurch gekennzeichnet dass** es sich bei der Metalloberfläche um Al, Al-Legierungen, Zn oder Zn-Legierungen handelt.

17. Verfahren gemäß Anspruch 15 oder 16 umfassend die Schritte:
a) Gegebenenfalls Reinigung der Oberfläche des Grundmetalls zur Entfernung von Ölen, Fetten und Schmutz,
b) gegebenenfalls Waschen mit Wasser,
c) gegebenenfalls Pickling, um Rost oder andere Oxide zu entfernen,
d) Waschen mit Wasser,
e) In-Kontakt-Bringen der Metalloberfläche mit einer Zusammensetzung gemäß einem der Ansprüche 1 bis 14,
f) gegebenenfalls Waschen mit Wasser,
g) gegebenenfalls Nachbehandlung.

18. Verfahren gemäß Anspruch 17, **dadurch gekennzeichnet, dass** es sich um ein "No-Rinse-Verfahren" mit den folgenden Schritten handelt:
a) Gegebenfalls Reinigung der Oberfläche des Grundmetalls zur Entfernung von Ölen, Fetten und Schmutz,
b) gegebenenfalls Pickling, um Rost oder andere Oxide zu entfernen,
c) In-Kontakt-Bringen der Metalloberfläche mit einer Zusammensetzung gemäß einem der Ansprüche 1 bis 14,
d) gegebenenfalls Nachbehandlung.

19. Verfahren nach einem der Ansprüche 15 bis 18, **dadurch gekennzeichnet, dass** das In-Kontakt-Bringen durch Sprüh-, Walz-, oder Tauchverfahren erfolgt.

20. Passivierungsschicht auf einer Metalloberfläche erhältlich durch ein Verfahren gemäß einem der Ansprüche 15 bis 19.

21. Passivierungsschicht nach Anspruch 20, **dadurch gekennzeichnet, dass** die Schichtdicke der Passivierungsschicht ≤ 3 µm beträgt.

22. Oberfläche aufgebaut aus einer Metalloberfläche und einer Passivierungsschicht nach Anspruch 20 oder 21.

23. Aufbau auf einer Metalloberfläche umfassend eine Passivierungsschicht X nach Anspruch 20 oder 21 und weitere Lackschichten Y.

24. Verfahren zur Ausbildung eines Lackaufbaus nach Anspruch 23, umfassend die Schritte:
• Ausbildung einer Passivierungsschicht X gemäß einem Verfahren nach Anspruch 15 bis 19; sowie
• Lackieren der Passivierungsschicht.

## Claims

1. A Cr(VI)-free composition for treating metal surfaces, having a pH of 1 to 6 and comprising
a) at least one copolymer as component A, synthesized from
aa) 50 to 99.9% by weight of (meth)acrylic acid or salts thereof as component Aa;
and
ab) 0.1 to 50% by weight of monomers comprising groups containing phosphoric and/or phosphonic acid or salts thereof, as component Ab, and polymerizable with the monomers specified under aa) and ac);
ac) 0 to 30% by weight of further comonomers polymerizable with the monomers specified under aa) and ab), as component Ac;
b) water or a mixture of water and one or more water-soluble solvents, the water fraction being at least 75% by weight, and which is capable of dissolving, dispersing, suspending or emulsifying the polymer (component A), as component B;
c) at least one acid or at least one alkali metal or alkaline earth metal salt of said acid selected from the group consisting of phosphoric acid, sulfuric acid, sulfonic acid, formic acid, acetic acid, nitric acid, hydrofluoric acid and hydrochloric acid as component F.

2. A composition according to claim 1, comprising further to components A, B, and F compounds of Ce, Ni, Co, V, Fe, Zn, Zr, Ca, Mn, Mo, W, Cr and/or Bi as component H.

3. A composition according to claim 2, wherein component H is selected from compounds of Fe, Zn, Zr, and Ca.

4. A composition according to any one of claims 1 to 3, comprising further to components A, B, F, and, if appropriate, H wax-based derivatives based on natural or synthetic waxes.

5. A composition according to claim 4, wherein said waxes are waxes based on acrylic acid, polyethylene waxes, polytetrafluoroethylene (PTFE) waxes, wax derivatives or paraffins and their oxidation products.

6. A composition according to any one of claims 1 to 5, wherein sulfonic acids as component F comprise one selected from the group consisting of methanesulfonic acid, vinylsulfonic acid, allysulfonic acid, m-nitrobenzenesulfonic acid, naphthalenesulfonic acid or derivatives thereof.

7. A composition according to any one of claims 1 to 6, wherein component Aa is acrylic acid or a salt of acrylic acid and component Ab is vinylphosphonic acid or methacrylic acid phosphonoxyethyl ester.

8. A composition according to any one of claims 1 to 7, wherein the amount of acrylic acid is 50 to 90% by weight.

9. A composition according to one of claims 1 to 7, comprising further to components A, B, F, if appropriate H, and, if appropriate, K
a) surface-active additives, dispersants, suspension agents and/or emulsifiers as component C,
and/or
b) at least one nitrogen base as component D,
and/or
c) at least one salt, acid or base based on transition metal cations, transition metal oxo anions, fluorometallates or lanthanoids as component E,
and/or
d) at least one further corrosion inhibitor as component G,
and/or
e) further auxiliaries and additives as component I,
and/or
f) at least one complexing agent as component J,
and/or
g) further additives as component K.

10. A composition according to claim 9, wherein component C comprises surfactants selected from the group consisting of alkyl and alkenyl alkoxylates of the general formula R-EOₙ/POₘ, alkylphenol ethoxylates, EO/PO block copolymers, alkyl ether sulfates, and alkylammonium salts, where EO is an ethylene oxide unit, PO is a propylene oxide unit, and R is a linear or branched C₆ to C₃₀-alkyl radical, and where n and m independently of one another are greater than 1 and less than 100, with the proviso that the EO and PO units in the compounds R-EOₙ/POₘ can be arranged in any desired sequence.

11. A composition according to claim 9, wherein the corrosion inhibitor G comprises at least one selected from the group consisting of butynediol, benzotriazole, aldehydes, amine carboxylates, aminophenols and nitrophenols, amino alcohols, aminobenzimidazole, aminoimidazolines, amino-triazole, benzimidazolamines, benzothiazoles, benzotriazole derivatives, esters of boric acid with various alkanolamines, carboxylic acids and their esters, quinoline derivatives, dibenzyl sulfoxide, dicarboxylic acids and their esters, diisobutenylsuccinic acid, dithiophosphonic acid, fatty amines and fatty acid amides, guanidine derivatives, urea and its derivatives, laurylpyridinium chloride, maleamides, mercaptobenzimidazole, N-2-ethylhexyl-3-aminosulfopropionic acid, phosphonium salts, phthalamides, amine- and sodium-neutralized phosphoric esters of alkyl alcohols, and also these phosphoric esters themselves, phosphoric esters of polyalkoxylates, polyetheramines, sulfonium salts, sulfonic acids, thioethers, thioureas, thiuramide sulfides, cinnamic acid and its derivatives, zinc phosphates and zinc silicates, zirconium phosphates and zirconium silicates, and alkynediol alkoxylates.

12. A composition according to claim 9, wherein the corrosion inhibitor G is at least one selected from the group consisting of butynediol, benzotriazole, and alkynediol alkoxylates.

13. A composition according to claim 9, wherein component I is a conductivity pigment.

14. A composition according to claim 9, wherein component J is a complexing agent.

15. A chromium(VI)-free process for forming a passivating layer on a metal surface, wherein the metal surface is contacted with a composition according to any one of claims 1 to 14.

16. A process according to claim 15, wherein the metal surface comprises Al, Al alloys, Zn or Zn alloys.

17. A process according to claim 15 or 16, comprising the steps of:
a) if appropriate, cleaning the substrate metal surface to remove oils, fats, and dirt,
b) if appropriate, washing with water,
c) if appropriate, pickling to remove rust or other oxides,
d) washing with water,
e) contacting the metal surface with a composition according to any one of claims 1 to 14,
f) if appropriate, washing with water,
g) if appropriate, aftertreatment.

18. A process according to claim 17, which is a "no-rinse" process featuring the following steps:
a) if appropriate, cleaning the substrate metal surface to remove oils, fats, and dirt,
b) if appropriate, pickling to remove rust or other oxides,
c) contacting the metal surface with a composition according to any one of claims 1 to 14,
d) if appropriate, aftertreatment.

19. A process according to any one of claims 15 to 18, wherein said contacting is effected by spraying, rolling or dipping methods.

20. A passivating layer on a metal surface, obtainable by a process according to any one of claims 15 to 19.

21. A passivating layer according to claim 20, whose thickness is ≤ 3 *µ*m.

22. A surface composed of a metal surface and a passivating layer according to claim 20 or 21.

23. A system on a metal surface comprising a passivating layer X according to claims 20 or 21 and further coating films Y.

24. A process of forming a coating system according to claim 23, comprising the steps of:
• forming a passivating layer X by a process according to claims 15 to 19;
• coating the passivating layer.

## Revendications

1. Composition exempte de Cr(VI) pour le traitement de surface métallique, d'un pH de 1 à 6 et contenant :
a) au moins un copolymère, en tant que composant A, constitué de :
aa) 50 à 99,9 % en poids d'acide (méth)acrylique ou de ses sels, en tant que composant Aa,
et
ab) 0,1 à 50 % en poids de monomères présentant des groupes contenant de l'acide phosphorique et/ou phosphonique ou leurs sels, en tant que composant Ab, et qui sont polymérisables avec les monomères mentionnés sous aa) et ac), ainsi que
ac) 0 à 30 % en poids d'autres comonomères polymérisables avec les monomères mentionnés sous aa) et ab), en tant que composant Ac,
b) de l'eau ou un mélange d'eau et d'un ou plusieurs solvants solubles dans l'eau, la fraction d'eau étant d'au moins 75 % en poids, capable de dissoudre, de disperser, de mettre en suspension ou d'émulsifier le polymère (composant A), en tant que composant B,
c) au moins un acide ou au moins un sel de métal alcalin ou alcalino-terreux de l'acide correspondant, choisi dans le groupe formé par l'acide phosphorique, l'acide sulfurique, des acides sulfoniques, l'acide formique, l'acide acétique, l'acide nitrique, l'acide fluorhydrique et l'acide chlorhydrique, en tant que composant F.

2. Composition suivant la revendication 1, contenant, outre les composants A, B et F, des composés de Ce, Ni, Co, V, Fe, Zn, Zr, Ca, Mn, Mo, W, Cr et/ou Bi, en tant que composant H.

3. Composition suivant la revendication 2, **caractérisée en ce que** le composant H est choisi parmi des composés de Fe, Zn, Zr et Ca.

4. Composition suivant l'une quelconque des revendications 1 à 3, contenant, outre les composants A, B, F et le cas échéant H, des dérivés cireux à base de cires naturelles ou synthétiques.

5. Composition suivant la revendication 4, **caractérisée en ce que** les cires sont des cires à base d'acide acrylique, de cires de polyéthylène, de polytétrafluoréthylène (PTFE), de dérivés de cires ou de paraffines et leurs produits d'oxydation.

6. Composition suivant l'une quelconque des revendications 1 à 5, **caractérisée en ce que** les acides sulfoniques en tant que composant F acide sont des choisis dans le groupe formé par l'acide méthane-sulfonique, l'acide vinylsulfonique, l'acide allylsulfonique, l'acide m-nitrobenzène-sulfonique, l'acide naphtalène-sulfonique ou leurs dérivés.

7. Composition suivant l'une quelconque des revendications 1 à 6, **caractérisée en ce que** le composant Aa est de l'acide acrylique ou un sel de l'acide acrylique, et le composant Ab est de l'acide vinylphosphonique ou un (phosphonoxyéthyl)ester de l'acide méthacrylique.

8. Composition suivant l'une quelconque des revendications 1 à 7, **caractérisée en ce que** la quantité d'acide acrylique est de 50 à 90 % en poids.

9. Composition suivant l'une quelconque des revendications 1 à 8, contenant, outre les composants A, B, F, le cas échéant H et le cas échéant K,
a) des additifs tensioactifs, des agents de dispersion, des agents de suspension et/ou des émulsifiants, en tant que composant C,
et/ou
b) au moins une base azotée en tant que composant D,
et/ou
c) au moins un sel, un acide ou une base à base de cations de métaux de transition, d'oxoanions de métaux de transition, de métallates fluorés ou de lanthanides, en tant que composant E,
et/ou
d) au moins un autre inhibiteur de corrosion, en tant que composant G,
et/ou
e) d'autres adjuvants et additifs, en tant que composant I,
et/ou
f) au moins un complexant en tant que composant J,
et /ou
g) d'autres additifs, en tant que composant K.

10. composition suivant la revendication 9, **caractérisée en ce que** le composant C couvre des tensioactifs choisis dans le groupe formé par des alcoxylates d'alkyle et d'alcényle de la formule générale R-EOₙ/POₘ, des éthoxylates d'alkylphénols, des copolymères séquencés d'EO/PO, des alkyléther-sulfates ou des sels d'alkylammonium, EO représentant une unité d'oxyde d'éthylène, PO une unité d'oxyde de propylène et R un radical alkyle linéaire ou ramifié en C₆ à C₃₀, et n et m étant indépendamment l'un de l'autre supérieurs à 1 et inférieurs à 100, à la condition que les unités EO et PO puissent, dans les composés R-EOₙ/POₘ, être placées en n'importe quel ordre.

11. Composition suivant la revendication 9, **caractérisée en ce que** l'inhibiteur de corrosion G est au moins un inhibiteur choisi dans le groupe formé par le butynediol, le benzotriazole, des aldéhydes, des carboxylates d'amine, des amino- et des nitrophénols, des alcools aminés, de l'aminobenzimidazole, des aminoimidazolines, de l'aminotriazole, des benzimidazolamines, des benzothiazoles, des dérivés de benzotriazole, des esters d'acide borique avec différentes alcanolamines, des acides carboxyliques et leurs esters, des dérivés de quinoléine, du sulfoxyde de dibenzyle, des acides dicarboxyliques et leurs esters, de l'acide diisobuténylsuccinique, de l'acide dithiophosphonique, des amines grasses et dés amides d'acides gras, des dérivés de guanidine, de l'urée et ses dérivés, du chlorure de laurylpyridinium, des amides maléiques, du mercaptobenzimidazole, de l'acide N-2-éthylhexyl-3-aminosulfopropionique, des sels de phosphonium, des amides phtaliques, des esters d'acide phosphorique neutralisés par amine et sodium d'alcools alkyliques ainsi que ces esters d'acide phosphorique eux-mêmes, des esters d'acide phosphorique de polyalcoxylates, des polyétheramines, des sels de sulfonium, des acides sulfoniques, des thioéthers, des thiourées, des sulfures de thiouramide, l'acide cinnamique et ses dérivés, des phosphates et des silicates de zinc, des phosphates et silicates de zirconium et des alcoxylates d'alcynediols.

12. Composition suivant la revendication 9, **caractérisée en ce que** l'inhibiteur de corrosion G est au moins un inhibiteur choisi dans le groupe formé par le butynediol, le benzotriazole ou des alcoxylates d'alcynediols.

13. Composition suivant la revendication 9, **caractérisée en ce que** le composant I est un pigment conducteur.

14. Composition suivant la revendication 9, **caractérisée en ce que** le composant J est un complexant.

15. Procédé exempt de Cr(VI) pour la formation d'une couche de passivation sur une surface métallique, la surface métallique étant mise en contact avec une composition suivant l'une quelconque des revendications 1 à 14.

16. Procédé suivant la revendication 15, **caractérisé, en ce que** la surface métallique est de l'Al, des alliages d'Al, du Zn ou des alliages de Zn.

17. Procédé suivant la revendication 15 ou 16, comprenant les étapes suivantes :
a) le cas échéant, nettoyage de la surface du métal de base afin d'éliminer des huiles, des graisses et de la saleté,
b) le cas échéant, lavage à l'eau,
c) le cas échéant, décapage afin d'éliminer de la rouille ou d'autres oxydes,
d) lavage à l'eau,
e) mise en contact de la surface métallique avec une composition suivant l'une quelconque des revendications 1 à 14,
f) le cas échéant, lavage à l'eau,
g) le cas échéant, post-traitement.

18. Procédé suivant la revendication 17, **caractérisé en ce qu'**il s'agit d'un "procédé sans rinçage" ("no-rinse") comportant les étapes suivantes :
a) le cas échéant, nettoyage de la surface du métal de base afin d'éliminer des huiles, des graisses et de la saleté,
b) le cas échéant, décapage afin d'éliminer de la rouille ou d'autres oxydes,
c) mise en contact de la surface métallique avec une composition suivant l'une quelconque des revendications 1 à 14,
d) le cas échéant, post-traitement.

19. Procédé suivant l'une quelconque des revendications 15 à 18, **caractérisé en ce que** la mise en contact se fait par un procédé de pulvérisation, de laminage ou d'immersion.

20. Couche de passivation sur une surface métallique, que l'on peut obtenir par un procédé suivant l'une quelconque des revendications 15 à 19.

21. Couche de passivation suivant la revendication 20, **caractérisée en ce que** l'épaisseur de couche de la couche de passivation est ≤ 3 µm.

22. Surface constituée d'une surface métallique et d'une couche de passivation suivant la revendication 20 ou 21.

23. Formation de revêtement sur une surface métallique, comprenant une couche de passivation X suivant la revendication 20 ou 21 et d'autres couches de peinture Y.

24. Procédé de réalisation d'une formation de peinture suivant la revendication 23, comprenant les étapes suivantes :
• Formation d'une couche de passivation X par un procédé suivant les revendications 15 à 19, ainsi que
• peinture de la couche de passivation.
